**Europäisches Patentamt**

**European Patent Office**

**Office européen des brevets**

(19)

(11) Veröffentlichungsnummer : **0 359 990 B1**

(12) # EUROPÄISCHE PATENTSCHRIFT

(45) Veröffentlichungstag der Patentschrift :
**28.10.92 Patentblatt 92/44**

(51) Int. Cl.⁵ : **B60K 26/04, F02D 11/10**

(21) Anmeldenummer : **89115049.2**

(22) Anmeldetag : **16.08.89**

(54) **Vorrichtung mit einem Stellmotor zum Eingriff in eine Übertragungseinrichtung.**

(30) Priorität : **23.09.88 DE 3832400**

(43) Veröffentlichungstag der Anmeldung :
**28.03.90 Patentblatt 90/13**

(45) Bekanntmachung des Hinweises auf die
Patenterteilung :
**28.10.92 Patentblatt 92/44**

(84) Benannte Vertragsstaaten :
**DE ES FR GB IT SE**

(56) Entgegenhaltungen :
**EP-A- 0 081 171**
**EP-A- 0 107 265**
**DE-A- 3 151 134**
**DE-A- 3 447 896**

(56) Entgegenhaltungen :
**DE-A- 3 641 244**
**DE-A- 3 831 257**
**US-A- 4 367 805**
**US-A- 4 756 287**

(73) Patentinhaber : **ROBERT BOSCH GMBH**
**Postfach 30 02 20**
**W-7000 Stuttgart 30 (DE)**

(72) Erfinder : **Stegmaier, Alwin**
**100 Waverly Place Circl Nr. A2**
**North Charleston (US)**
Erfinder : **Wilde, Werner**
**Im Wolfsgalgen 30**
**W-7141 Schwieberdingen (DE)**
Erfinder : **Loercher, Klaus, Dipl.-Ing. (FH)**
**Harry-Schulz-Weg 6**
**W-7263 Bad Liebenzell (DE)**

## Beschreibung

### Stand der Technik

Die Erfindung geht aus von einer Vorrichtung mit einem Stellmotor zum Eingriff in eine Übertragungseinrichtung zwischen einem Bedienelement und einem die Leistung einer Antriebsmaschine bestimmenden Steuerorgan nach der Gattung des Hauptanspruchs.

Für verschiedene Regelungen von Antriebsmaschinen ist ein Eingriff in die Übertragungseinrichtung zwischen dem Bedienelement, beispielsweise einem Gaspedal, und dem Steuerorgan, beispielsweise einer Drosselklappe eines Ottomotors oder einem Stellhebel eines Dieselmotors oder dergleichen, erforderlich. Die Regelung kann dabei durch an sich bekannte Regeleinrichtungen geschehen, z.B. zur Vermeidung von Schlupf zwischen von der Antriebsmaschine angetriebenen Rädern eines Kraftfahrzeuges und einem Fahrbahnbelag.

Bei einer bekannten Vorrichtung der gettungsgemäßen Art (DE-A-36 08 751) ist das Bedienelement über z.B. einen Seilzug mit einem ersten Hebel und das Steuerorgan über z.B. einen weiteren Seilzug mit einem zweiten Hebel wirkverbunden. Eine Rückstellfeder versucht das Steuerorgan in eine Endstellung zu bringen. Eine Spannfeder wirkt einerseits auf den ersten Hebel und andererseits auf den zweiten Hebel mit dem Bestreben, einen Anschlag des ersten Hebels gegen einen Anschlag des zweiten Hebels zu drücken. Die Wirkung der Spannfeder ist größer als die Wirkung der Rückstellfeder. Des weiteren kann auf den zweiten Hebel ein Stellmotor einwirken und zwar so, daß der zweite Hebel entgegen der Spannfeder gegenüber dem ersten Hebel verdreht wird und die beiden Anschläge voneinander abheben. Mit Verdrehen des zweiten Hebels gegenüber dem ersten Hebel kann die Stellung des Steuerorgans gegenüber der Stellung des Bedienelements verändert werden. Der Stellmotor wirkt auf den zweiten Hebel in Richtung der Rückstellfeder, entgegen der Spannfeder.

Bei der Übertragungseinrichtung ist zwischen zwei Betriebszuständen zu unterscheiden: einem ungeregelten Betriebszustand und einem geregelten Betriebszustand.

Im ungeregelten Betriebszustand ist der Stellmotor nicht angesteuert. Eine bestimmte Position des Steuerorgangs gehört zu einer bestimmten Position des Bedienelements. Das Steuerorgan folgt dem Bedienelement gemäß einem vorgegebenen Übertragungsverhältnis.

Im geregelten Betriebszustand wird das Übertragungsverhältnis durch den Stellmotor verändert. Zunächst wird durch das Bedienelement eine Position vorgegeben. Dieser Position würde im ungeregelten Betriebszustand eine bestimmte Position des Steuerorgangs entsprechen. Im geregelten Betriebszustand jedoch ist der Stellmotor angesteuert, was bewirkt, daß das Steuerorgan eine von der Position im ungeregelten Betriebszustand abweichende Position einnimmt.

Im ungeregelten Betriebszustand, d.h. bei nicht angesteuertem Stellmotor, muß bei Betätigung des Bedienelements zur Veränderung der Position des Steuerorgans ein Rotor des Stellmotors mitbetätigt werden. Dies erfordert höhere Betätigungskräfte bei Betätigung des Steuerorgans. Damit die Kraft der Rückstellfeder nicht zu groß ausgelegt werden muß, wurde vorgeschlagen, zwischen dem Stellmotor und dem zweiten Hebel einen Freilauf einzubauen. Der Freilauf kann die Betätigungskräfte nur in einer Betätigungsrichtung verringern.

### Vorteile der Erfindung

Die erfindungsgemäße Vorrichtung mit den kennzeichnenden Merkmalen des Hauptanspruchs hat demgegenüber den Vorteil, daß durch Einfügen eines dritten Drehglieds zwischen dem zweiten Drehglied und dem Rotor des Stellmotors im ungeregelten Betriebszustand bei Betätigung des Bedienelements durch die Vorrichtung keine erhöhten Betätigungskräfte hervorgerufen werden. Durch das dritte Drehglied ist es möglich, mit Betätigung des Bedienelements das Steuerorgan zu verstellen, ohne daß der Rotor des Stellmotors mitbewegt werden muß.

Durch die in den Unteransprüchen aufgeführten Maßnahmen sind vorteilhafte Weiterbildungen und Verbesserungen der im Hauptanspruch angegebenen Vorrichtung möglich. Insbesondere ergeben sich mindestens die nachfolgend aufgeführten Vorteile.

Koaxiales Anordnen aller drei Drehglieder auf einer Achse ergibt eine besonders einfache und kompakte Konstruktion.

Die Vorrichtung kann so ausgeführt sein, daß das zweite Drehglied über das dritte Drehglied durch den Stellmotor in Richtung einer geringeren Leistung der Antriebsmaschine und/oder in Richtung einer höheren Leistung verdrehbar ist.

Die Verdrehung durch den Stellmotor in Richtung der höheren Leistung kann auf einen maximal zulässigen Drehwinkel Beta ($\beta$) und die Verdrehung in Richtung der geringeren Leistung der Antriebsmaschine ist ebenfalls auf einen maximal zulässigen Drehwinkel Gamma ($\gamma$) begrenzbar.

Durch einen an dem zweiten Drehglied axial hervorstehenden, exzentrisch angeordneten Noppen und durch eine Aussparung in dem dritten Drehglied, in die der Noppen eingreifen kann, wobei die Ausdehnung der Aussparung in Umfangsrichtung größer ist als die Ausdehnung des Noppens ebenfalls in Umfangsrichtung, kann das zweite Drehglied gegenüber dem dritten Drehglied um den Betrag, um den die Aussparung in Umfangsrichtung größer ist als der Noppen, frei verdreht werden.

Eine Rückdrehfederung kann, bei Nichtansteuerung des Stellmotors, das dritte Drehglied in eine Ruhelage bringen. Die Ruhelage des dritten Drehglieds kann so gewählt werden, daß, bei ausreichendem Spiel zwischen dem Noppen und der Aussparung in dem dritten Drehglied, das Steuerorgan von einer Stellung mit minimaler Leistung der Antriebsmaschine bis zu der Stellung mit maximaler Leistung der Antriebsmaschine verstellt werden kann, ohne daß das dritte Drehglied und damit der Rotor des Stellmotors mitbewegt werden muß.

Zwischen dem dritten Drehglied und dem Stellmotor kann in vorteilhafter Weise ein Getriebe zwischengeschaltet sein. Die Rückdrehfederung kann aus einer Feder bestehen, deren eines Ende unmittelbar auf das dritte Drehglied wirken kann. Dies erfordert eine Feder mit nur relativ kleinem Federweg. Die Rückdrehfederung kann aber auch aus mindestens einer Feder bestehen, welche mittelbar über das Getriebe auf das dritte Drehglied wirkt. Bei den gebräuchlichen Stellmotoren muß das Getriebe üblicherweise so ausgeführt sein, daß eine hohe Drehzahl des Rotors einer geringen Drehzahl des dritten Drehgliedes entspricht. Eine Übersetzung von hoher Drehzahl auf niedrige Drehzahl entspricht aber auch gleichzeitig einer Übersetzung von einem niedrigen Drehmoment zu einem hohen Drehmoment. Deshalb ist es auch möglich, eine mittelbar wirkende Feder mit nur relativ geringer Kraft bzw. geringem Drehmoment zu verwenden.

Ausbildung der Rückdrehfederung in Form einer Biegefeder bzw. in Form einer Flachbandbiegefeder ergibt eine besonders günstige Konstruktion. Diese kann in etwa kreisbogenförmig gewunden sein oder die Form einer Spiralfeder haben. Dadurch kann die Rückdrehfederung besonders günstig und platzsparend koaxial zu dem dritten Drehglied oder koaxial zu einem Treibrad des Getriebes angeordnet sein.

Der Stellmotor, das Getriebe und die Achse für die Drehglieder können auf einer gemeinsamen Basisplatte angeordnet sein. Eine besonders günstige Konstruktion ergibt sich, wenn der Stellmotor so mit der Basisplatte verbunden ist, daß ein mit dem Rotor verbundenes Treibrad mehr oder weniger in eine Aussparung in der Basisplatte hineinragt bzw. auf die andere Seite der Basisplatte ragt, wo es die Treibräder eines Getriebes antreiben kann. Die Achse für die Drehglieder ist ebenfalls mit der Basisplatte verbunden und zwar auf der dem Stellmotor abgewandten Seite der Basisplatte.

Üblicherweise besteht die Übertragungseinrichtung zwischen dem Bedienelement und dem Steuerorgan im wesentlichen aus einem Bowdenzug. Zur Einfügung der erfindungsgemäßen Vorrichtung kann der Bowdenzug an nahezu jeder beliebigen Stelle aufgetrennt werden. Das Bedienelement kann nun über einen ersten Bowdenzug mit dem ersten Drehglied und das zweite Drehglied kann über einen zweiten Bowdenzug mit dem Steuerorgan wirkverbunden sein. An der Basisplatte können auch noch die Fixierpunkte für einen Bowdenzugmantel befestigt sein.

In der Basisplatte können ein oder mehrere Befestigungslöcher vorgesehen sein, wodurch die gesamte Vorrichtung an einem Chassis, bei einem Kraftfahrzeug z.B. an der Karosserie, befestigt werden kann. In der Wahl eines Anbringungsorts für die Vorrichtung ist man relativ flexibel. Dadurch ist es möglich, die Vorrichtung an einer schwingungsarmen Stelle anzubringen, und in diesem Fall kann als Stellmotor z.B. ein relativ einfach gebauter, kostengünstiger Elektromotor verwendet werden.

Die gesamte Vorrichtung kann mit einem Gehäuse mit nur wenigen Aussparungen schützend umhüllt werden. Durch eine der Aussparungen wird die Verbindung zwischen dem Bedienelement und dem ersten Drehglied, durch eine zweite Aussparung wird die Verbindung zwischen dem zweiten Drehglied und dem Steuerorgan hergestellt, und durch eine dritte Aussparung geschieht die Durchführung von Leitungen zur Ansteuerung des Stellmotors. An einer weiteren Aussparung oder an weiteren Aussparungen erfolgt die Befestigung der Vorrichtung an dem Chassis. Das Gehäuse kann aber auch zweigeteilt sein. Ein Teil des Gehäuses deckt z.B. auf der einen Seite der Basisplatte den Stellmotor ab und ein anderer Teil des Gehäuses überdeckt die Drehglieder und das Getriebe.

Die Spannfeder, die einerseits auf das erste Drehglied und andererseits auf das zweite Drehglied wirkt, wird vorteilhafterweise als Biegefeder ausgeführt. Besonders günstig ist es, die Spannfeder als Flachbandbiegefeder auszuführen und in Form einer Spiralfeder zu winden. Dadurch ist es möglich, die Spannfeder in etwa koaxial zu dem ersten und dem zweiten Drehglied zwischen den beiden Drehgliedern anzuordnen.

Eine besonders vorteilhafte Regelung ergibt sich, wenn mit Hilfe eines Wegmeßsystems die Stellung des Steuerorgans erfaßt werden kann.

Zeichnung

Zwei Ausführungsbeispiele der Erfindung sind in der Zeichnung vereinfacht dargestellt und in der nachfolgenden Beschreibung näher erläutert. Die Figuren 1 und 2 zeigen ein erstes Ausführungsbeispiel in einer sogenannten Explosionsdarstellung, jedoch aus verschiedenen Blickwinkeln, die Figur 3 zeigt eine Einzelheit des ersten Ausführungsbeispiels und die Figuren 4 und 5 zeigen ein zweites Ausführungsbeispiel ebenfalls in einer Explosionsdarstellung.

Beschreibung der Ausführungsbeispiele

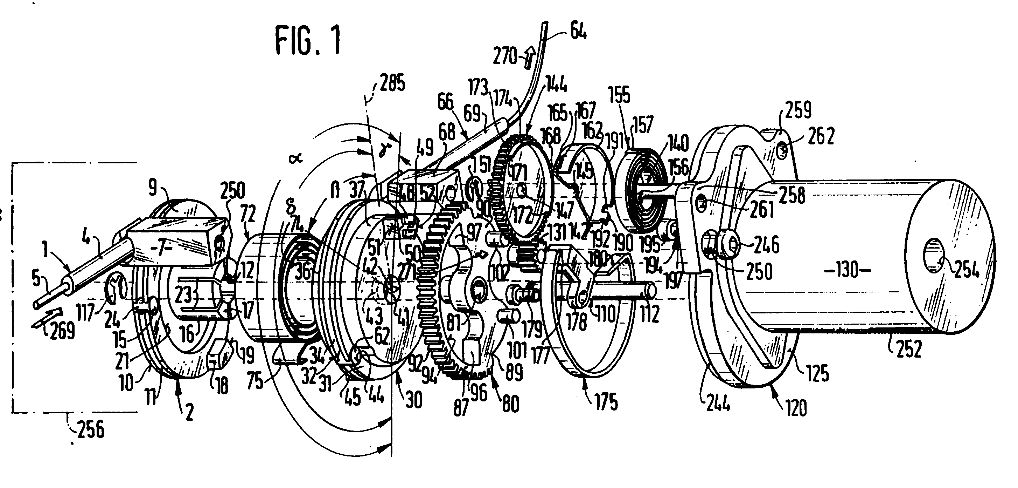

Aufbau und Wirkungsweise einer erfindungsgemäß ausgebildeten Vorrichtung mit einem Stellmotor zum Eingriff in eine Übertragungseinrichtung 1, 66 zwischen einem Bedienelement 3 und einem die Leistung einer Antriebsmaschine bestimmenden Steuerorgan 6 soll anhand zweier Ausführungsbeispiele und mit Hilfe der Figuren 1 bis 5 näher erläutert werden.

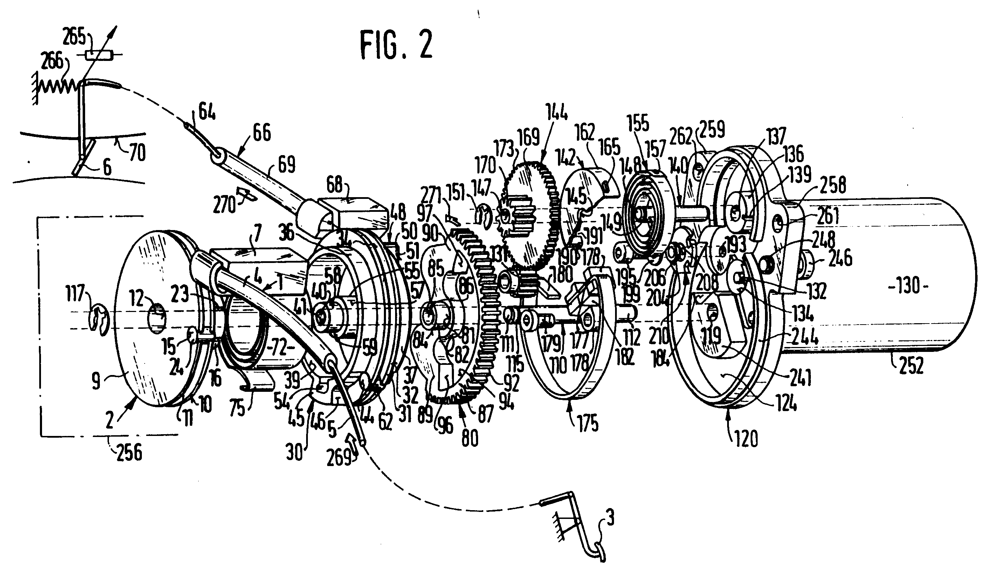

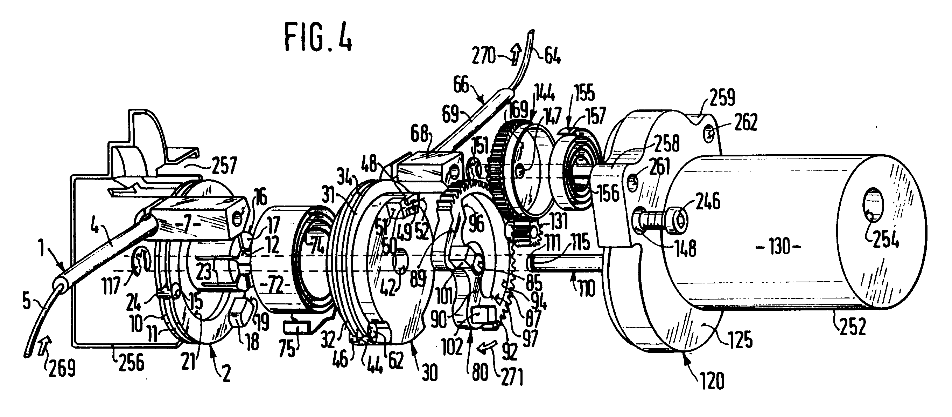

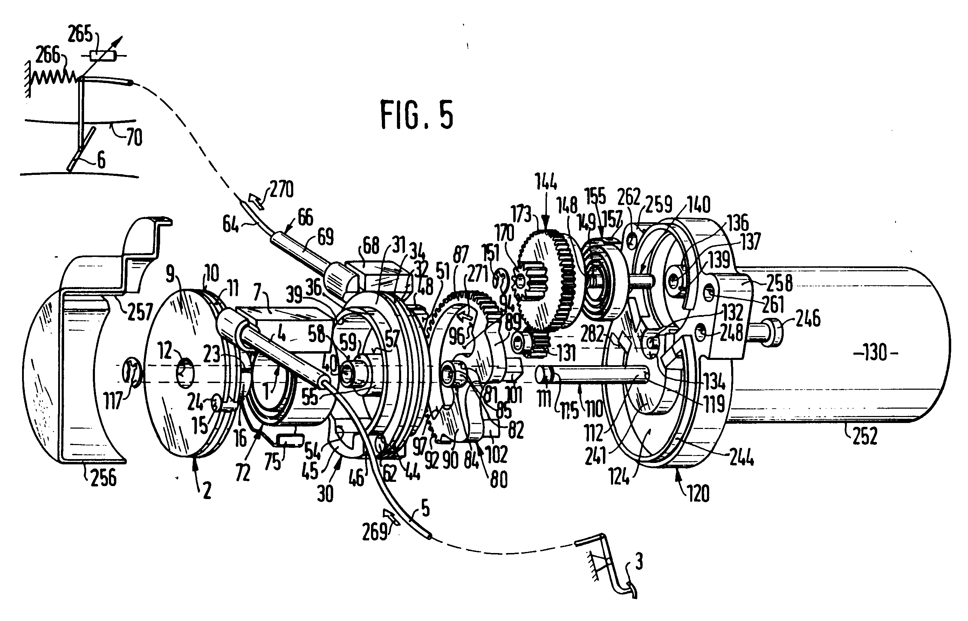

Die Figuren 1 und 2 zeigen das erste Ausführungsbeispiel und die Figuren 4 und 5 das zweite Ausführungsbeispiel jeweils unter verschiedenen Blickwinkeln. Zwecks besserer Übersichtlichkeit wurden die Abstände zwischen einzelnen Bauteilen der Vorrichtung mehr oder weniger vergrößert; die Teile wurden auseinandergezogen. Die Figuren 1, 2, 4 und 5 sind sogenannte Explosionszeichnungen. In allen Figuren wurden gleiche oder gleichwirkende Teile mit gleichen Bezugszeichen versehen. Um eine Zusammengehörigkeit der einzelnen Bauteile besser erkennen zu können, wurden vorhandene Achsen und Wellen durch gestrichelte Linien verlängert.

Von dem beispielsweise als Gaspedal ausgebildeten Bedienelement 3 (Figuren 2 und 5) führt ein erster Teil 1 der Übertragungseinrichtung zu einem ersten Drehglied 2. Der erste Teil 1 der Übertragungseinrichtung besteht in den beiden gezeichneten Ausführungsbeispielen aus einem Bowdenzug mit einem Bowdenzugmantel 4 und einer Bowdenzugseele 5. Von dem Bowdenzugmantel 4 wurde nur ein sich an die Vorrichtung anschließender Abschnitt gezeichnet. Der an die Vorrichtung sich anschließende Abschnitt des Bowdenzugmantels 4 wird an einer ersten Halterung 7 fixiert. Das erste Drehglied 2 besteht im wesentlichen aus einer Scheibe 9 mit einem Außenumfang 10, einem an dem Außenumfang 10 vorgesehenen Einstich 11, einer zentrischen Durchgangsbohrung 12, einer in der Nähe des Außenumfangs 10, den Einstich 11 schneidenden exzentrischen Bohrung 15, einem zylindrischen, axial hervorstehenden Federführungsteil 16 mit einer der Scheibe 9 abgewandten Stirnseite 17, einem an der Scheibe 9, auf der gleichen Seite wie das Federführungsteil 16, in der Nähe des Außenumfangs 10 axial herausstehenden Vorsprung 18 mit einem Anschlag 19 und aus einer ebenfalls auf dieser Seite vorgesehenen axialen Eindrehung 21 in der Scheibe 9. In dem Federführungsteil 16 sind mehrere radiale Schlitze 23 vorgesehen. Der Bowdenzugmantel 4 des ersten Teils 1 der Übertragungseinrichtung endet im Bereich der ersten Halterung 7. Die Bowdenzugseele 5 ragt aus dem Bowdenzugmantel 4 hinaus und schlingt sich, in dem Einstich 11 liegend, teilweise um die Scheibe 9 herum. Ein Ende der Bowdenzugseele 5 ist mit einem Bolzen 24, welcher in die exzentrische Bohrung 15 eingelegt ist, verbunden.

Koaxial zu dem ersten Drehglied 2 ist ein zweites Drehglied 30 gelagert. Das zweite Drehglied 30 hat im wesentlichen folgende Abschnitte: eine Scheibe 31 mit einem Außenumfang 32 und mit einem in dem Außenumfang 32 vorgesehenen Einstich 34, auf einer dem ersten Drehglied 2 zugewandten Stirnseite eine Andrehung 36, auf der dem ersten Drehglied abgewandten Stirnseite eine Andrehung 37, einen axialen Einstich 39 in der Andrehung 36, eine zentrische Durchgangsbohrung 40 und in der Nähe des Außenumfangs 32 eine exzentrische Bohrung 44. Die Durchgangsbohrung 40 unterteilt sich in einen Bereich 41 mit einem etwas kleineren Durchmesser und in einen Bereich 42 mit einem etwas größeren Durchmesser. Eine Stufe 43 unterteilt die Bohrung 40 in die beiden Bereiche. Die Andrehung 36 ist nicht rotationssymmetrisch, sondern sie hat eine Ausbauchung 45 mit einem Anschlag 46. Aus der Andrehung 37 ragt axial ein Noppen 48 heraus. In dem Noppen 48 ist ein Schlitz 49 vorgesehen. In den Schlitz 49 ist ein Elastomerformteil 50 eingelegt. Das Elastomerformteil 50 ragt in Drehrichtung an zwei Seiten über den Noppen 48 hinaus und bildet dort je eine Anschlagfläche 51 und 52. Auch der axiale Einstich 39 ist an seinem Außenumfang nicht rotationssymmetrisch, sondern er hat eine zusätzliche, mehr oder weniger in die Ausbauchung 45 hineinragende Ausnehmung 54. Innerhalb des axialen Einstiches 39 befindet sich zentrisch zu der Durchgangsbohrung 40 ein mit der Scheibe 31 verbundenes und am Außenumfang abgestuft ausgeführtes Führungsteil 55. Das Führungsteil 55 hat an der Scheibe 31 beginnend einen ersten Außendurchmesser 57 und einen kleineren zweiten Außendurchmesser 58. Zwischen den beiden Außendurchmessern 57 und 58 befindet sich eine Stufe 59. In die exzentrische Bohrung 44 ist ein Bolzen 62 eingelegt. An dem Bolzen 62 ist ein Ende einer Bowdenzugseele 64 eines zweiten Teils 66 der Übertragungseinrichtung befestigt. Ein Teil der Bowdenzugseele 64 liegt in dem Einstich 34 und schlingt sich teilweise um die Scheibe 31 des zweiten Drehglieds 30. Von dem zweiten Drehglied 30 führt die Bowdenzugseele 64 zu einem mit einer zweiten Halterung 68 verbundenen Bowdenzugmantel 69. Die Bowdenzugseele 64 und der Bowdenzugmantel 69 führen als Bestandteil des zweiten Teils 66 der Übertragungseinrichtung zu dem beispielsweise als Drosselklappe ausgebildeten Steuerorgan 6, das beispielsweise in einem Luftansaugrohr 70 einer nicht dargestellten Brennkraftmaschine angeordnet ist.

Zwischen dem ersten Drehglied 2 und dem zweiten Drehglied 30 befindet sich eine Spannfeder 72. Die Spannfeder 72 ist eine Biegefeder und hat die Form einer Spiralfeder. Sie liegt teilweise innerhalb des axialen Einstichs 39 und teilweise innerhalb der axialen Eindrehung 21. Ein erstes umgebogenes Ende 74 der Spannfeder 72 steckt in einem der radialen Schlitze 23 des Federführungsteils 16. Ein zweites umgebogenes Ende 75 der Spannfeder 72 greift in die Ausnehmung 54 des zweiten Drehglieds 30. Der zweite Außendurchmesser 58 am Führungsteil 55 des zweiten Drehglieds 30 ist etwas kleiner als die zentrische Durchgangsbohrung 12 des ersten Drehglieds 2 und der erste Außendurchmesser 57 ist deutlich größer als die zentrische Durchgangsbohrung 12. So kann das Führungsteil 55 ein Stück in die Durchgangsbohrung 12 des ersten Drehglieds geschoben werden, bis die Stirnseite 17 des Federführungsteils 16 an der Stufe 59 zur Anlage kommt.

Auf der von dem ersten Drehglied 2 abgewandten Seite des zweiten Drehglieds 30 ist konzentrisch zu den beiden Drehgliedern 2 und 30 ein drittes Drehglied 80 angeordnet. Das dritte Drehglied hat eine Mittenbohrung 81. In der Mittenbohrung 81 steckt eine Führungsbuchse 82. Die Führungsbuchse 82 ragt an der dem zweiten Drehglied 30 zugewandten Seite des dritten Drehglieds 80 mehr oder weniger heraus. Die Führungsbuchse 82 hat einen Außendurchmesser 84, eine Mittelbohrung 85 und eine Stirnseite 86. Ferner hat das dritte Drehglied 80 einen äußeren Ringbogen 87. Vom Ringbogen 87 verlaufen zwei Speichen 89 und 90 nach innen und gehen, die Mittenbohrung 81 umschließend, ineinander über. Über einen Außenumfang des Ringbogens 87 erstreckt sich ein Zahnprofil 92. Der Ringbogen 87 erstreckt sich nur über einen Teilbereich des Außenumfangs des dritten Drehglieds 80. Innerhalb des dritten Drehglieds 80, zwischen dem Ringbogen 87 und den beiden Speichen 89 und 90, wird eine Aussparung 94 gebildet. An der Speiche 89, der Aussparung 94 zugewandt, wird eine Anlagefläche 96 gebildet. An der Speiche 90, ebenfalls der Aussparung 94 zugewandt, wird eine Anlagefläche 97 gebildet. An dem dritten Drehglied 80, auf einer dem zweiten Drehglied 30 abgewandten Seite, steht an der Speiche 89 ein bolzenförmiger Ansatz 101 und an der Speiche 90 ein weiterer bolzenförmiger Ansatz 102 in axialer Richtung hervor. Das an dem dritten Drehglied 80 auf der dem zweiten Drehglied 30 zugewandten Seite hervorstehende Teil der Führungsbuchse 82 paßt mit leichtem Spiel in den Bereich 42 der Durchgangsbohrung 40 bis die Stirnseite 86 an der Stufe 43 des zweiten Drehglieds 30 zur Anlage kommt.

Das dritte Drehglied 80 ist auf einer Welle 110 gelagert. Auch das zweite Drehglied 30 ist zusammen mit dem ersten Drehglied 2 auf der Welle 110 gelagert. Die Welle 110 ist etwas länger als das Paket aus dem ersten Drehglied 2, dem zweiten Drehglied 30 und dem dritten Drehglied 80. Die Welle 110 hat zwei Enden, ein erstes Ende 111 und ein zweites Ende 112. Das erste Ende 111 überragt das Paket aus den drei Drehgliedern auf der Seite des ersten Drehglieds 2. Das erste Ende 111 hat dort einen Ringeinstich 115, in den ein Sicherungsring 117 eingeschnappt werden kann. Das zweite Ende 112 der Welle 110 ist in einer Bohrung 119 mit einer Basisplatte 120 fest verbunden.

Die Basisplatte 120 hat eine erste Seite 124 und eine zweite Seite 125. Die erste Seite 124 ist den Drehgliedern 2, 30 und 80 zugewandt und die zweite Seite 125 befindet sich an der Basisplatte 120 gegenüber der ersten Seite 124.

An der zweiten Seite 125 der Basisplatte 120 ist ein Stellmotor 130 angeordnet. Befestigungselemente, z.B. Schrauben, zur Befestigung des Stellmotors 130 an der Basisplatte 120 sind in der Zeichnung zwecks besserer Übersichtlichkeit nicht eingezeichnet. An einer der Basisplatte 120 zugewandten Stirnseite des Stellmotors 130 ragt ein Rotor 132 heraus und in eine Verbindungsbohrung 134 hinein. Da der Rotor 132 entweder von der Basisplatte 120 oder von dem Stellmotor 130 teilweise verdeckt wird, ist von dem Rotor 132 nur ein Stummel sichtbar (Figuren 2 und 5). Auf dem Rotor sitzt ein erstes Treibrad 131 eines Getriebes. Zwecks besserer Übersichtlichkeit wurde in den Figuren 1, 2, 4 und 5 das erste Treibrad 131 mit Abstand von dem Stellmotor 130 gezeichnet, aber in Wirklichkeit ist es mit dem Rotor 132 des Stellmotors 130 verbunden. In der Basisplatte 120 befindet sich zwischen der ersten Seite 124 und der zweiten Seite 125 die Verbindungsbohrung 134. Der Durchmesser der Verbindungsbohrung 134 ist größer als ein Außendurchmesser des ersten Treibrads 131 und so vorgesehen, daß mit Befestigung des Stellmotors 130 an der Basisplatte 120 das an dem Rotor 132 befestigte erste Treibrad 131 durch die Verbindungsbohrung 134 hindurchgesteckt werden kann. Das erste Treibrad 131 ragt auf der ersten Seite 124 der Basisplatte 120 mehr oder weniger weit heraus.

Auf der ersten Seite 124 der Basisplatte 120 ist ein Stumpf 136 angeordnet, in dessen Mitte sich eine Bohrung 137 befindet. Entlang einer Mantellinie des Stumpfs 136 ist eine Kerbe 139 vorgesehen. In der Bohrung 137 ist eine zweite Welle 140 mit dem Stumpf 136 und damit mit der Basisplatte 120 fest verbunden. Auf der zweiten Welle 140 ist zum einen ein Tellerrad 142 (Figuren 1, 2 und 3) und zum anderen ein zweites Treibrad 144 drehbar gelagert. In dem zweiten Ausführungsbeispiel (Figuren 4 und 5) kann das Tellerrad 142 entfallen. Die zweite Welle 140 ragt durch eine Bohrung 145 in dem Tellerrad 142 und durch eine Bohrung 147 in dem zweiten Treibrad 144 aus dem zweiten Treibrad 144 mit einem der Bohrung 137 abgewandten Ende 148 hinaus. An dem über das zweite Treibrad 144 hinausragenden Ende 148 der zweiten Welle 140 ist ein Ringeinstich 149 vorgesehen. In den Ringeinstich 149 kann ein Sicherungsring 151 eingeschnappt werden. Mit dem Sicherungsring 151 wird ein Herabgleiten des zweiten Treibrads 144 und des Tellerrads 142 von der zweiten Welle 140 verhindert. Zwischen dem Tellerrad 142 und der ersten Seite 124 befindet sich eine erste Rückdrehfeder 155. Die Rückdrehfeder 155 ist eine Biegefeder und hat die Form einer Spiralfeder. Die Rückdrehfeder 155 umgibt den Stumpf 136. Ein erstes Ende 156 der Rückdrehfeder 155 greift in die Kerbe 139 des Stumpfs 136. Ein zweites Ende 157 der Rückdrehfeder 155 ist an dem Tellerrad 142 (Figuren 1, 2 und 3) bzw. an dem zweiten Treibrad 144 (Figuren 4 und 5) angelenkt. An einem zylindrischen Rand 162 des Tellerrads 142 (Figuren 1 und 2) ragt ein prismatischer erster Mitnehmer 165 radial über den zylindrischen Rand 162 hinaus. Der Mitnehmer 165 hat in Umfangsrichtung gesehen ein erstes Anschlagende 167 und ein zweites Anschlagende 168. Das zweite Treibrad 144 besteht im wesentlichen aus einer ersten Scheibe 169 und aus einer zweiten Scheibe 170. An einer dem Tellerrad 142 zugewandten Seite der ersten Scheibe 169 des zweiten Treibrades 144 ist eine erste Anschlagkante 171 und eine zweite Anschlagkante 172 vorgesehen (Figuren 1 und 2). Die beiden Anschlagkanten 171, 172 sind an einem axial über das Tellerrad 142 greifenden Kragen 174 ausgebildet und so angeordnet, daß bei einer Verdrehung des zweiten Treibrads 144, je nach Drehrichtung, entweder die erste Anschlagkante 171 an dem ersten Anschlagende 167 des Tellerrandes 142 oder die zweite Anschlagkante 172 an dem zweiten Anschlagende 168 zur Anlage kommt. Im zweiten Ausführungsbeispiel (Figuren 4 und 5) sind die beiden Anschlagkanten 171, 172 nicht notwendig und auch nicht vorgesehen. Die erste Scheibe 169 hat einen größeren Durchmesser als die zweite Scheiben 170. Die erste Scheibe 169 und die zweite Scheibe 170 sind je mit einem Zahnprofil 173 am Außenumfang versehen. Ein Zahnprofil des ersten Treibrades 131 greift in das Zahnprofil der ersten Scheibe 169 des zweiten Treibbrades 144, und ein Zahnprofil der zweiten Scheibe 170 des zweiten Treibrades 144 greift in ein Zahnprofil am Ringbogen 87 des dritten Drehgliedes 80.

An dem zylindrischen Rand 162 des Tellerrads 142 steht auch noch ein zweiter Mitnehmer 190 radial über den zylindrischen Rand 162 hinaus. Im zylindrischen Rand 162, in Umfangsrichtung gesehen beiderseits des zweiten Mitnehmers 190, sind je eine Aussparung 191 und 192 vorgesehen (Figuren 1, 2 und 3).

In dem ersten Ausführungsbeispiel (Figuren 1 und 2) hat eine zweite Rückdrehfeder das Bezugszeichen 175. Die zweite Rückdrehfeder 175 ist eine Biegefeder und hat die Form einer bogenförmig gewundenen Flachbandbiegefeder. Die Rückdrehfeder 175 hat zwei Federenden. Das erste Federende 177 ist abgewinkelt und wird mit Hilfe einer Aufnahme 178 und einer Schraube 179 mit der Basisplatte 120 verbunden. In die Aufnahme 178 ist eine Anschlagplatte 182 integriert. Das zweite Federende 180 kann, je nach Stellung des dritten Drehglieds 80, entweder an einem Anschlag 184, welcher auf der ersten Seite 124 der Basisplatte 120 hervorsteht, anliegen, oder es kann an dem Bolzen 102 des dritten Drehglieds 80 zur Anlage kommen. In den Figuren 4 und 5 entfällt die zweite Rückdrehfeder 175.

In dem ersten Ausführungsbeispiel (Figuren 1 bis 3) bilden die beiden Rückdrehfedern 155 und 175 eine Rückdrehfederung. In dem zweiten Ausführungsbeispiel (Figuren 4 und 5) wird die Rückdrehfederung allein von der ersten Rückdrehfeder 155 gebildet.

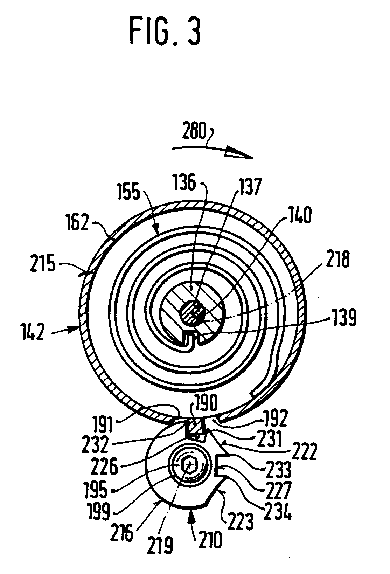

Das zweite Ausführungsbeispiel (Figuren 4 und 5) enthält weniger Teile als das erste Ausführungsbeispiel (Figuren 1, 2 und 3). Unter anderem sind die nachfolgend beschriebenen und mit Bezugszeichen von 193 bis 234 versehenen Einzelheiten nur in dem ersten Ausführungsbeispiel (Figuren 1 bis 3) enthalten. Die Figur 3 gilt deshalb nur für das erste Ausführungsbeispiel.

Bei dem ersten Ausführungsbeispiel (Figuren 1 bis 3) befindet sich in der Basisplatte 120, auf der ersten Seite 124, eine dritte Bohrung 193 mit einem Innengewinde. In die dritte Bohrung 193 ist eine Schraube 194 mit einem Schraubenkopf 195 und mit einem Schraubenschaft 197 hineingeschraubt. Zwischen dem Schraubenkopf 195 und der Basisplatte 120 sind eine Scheibe 199 und eine Hülse 204 angeordnet. Der Durchmesser eines Loches der Scheibe 199 und der Durchmesser eines Loches der Hülse 204 sind etwas größer als der Durchmesser des Schraubenschafts 197, so daß der Schraubenschaft 197 durch die Scheibe 199 und durch die Hülse 204 hindurchgeführt werden kann. Die Länge des Schraubenschafts 197, die Dicke der Scheibe 199, die Länge der Hülse 204 und die Tiefe der Bohrung 193 mit dem Gewinde sind so aufeinander abgestimmt, daß die Schraube 194 so weit in die dritte Bohrung 193 hineingeschraubt werden kann, daß die Scheibe 199 und die Hülse 204 zwischen dem Schraubenkopf 195 und der Basisplatte 120 fest eingespannt sind. Die Scheibe 199 und die Hülse 204 sind auf dem Schraubenschaft 197 so angeordnet, daß die Scheibe 199 an dem Schraubenkopf 195 und die Hülse 204 an der Basisplatte 120 anliegt. Die Hülse 204 hat einen Außendurchmesser 206. Der Außendurchmesser 206 ist etwas kleiner als der Durchmesser eines Loches 208 eines Sternrads 210. Das Sternrad 210 befindet sich zwischen der Scheibe 199 und der Basisplatte 120 und umgibt die Hülse 204. Da das Sternrad 210 nicht so lang wie die Hülse 204 ist, kann sich das Sternrad 210 auch bei fest angezogener Schraube 194 frei drehen.

Das Tellerrad 142 mit dem zweiten Mitnehmer 190 und das Sternrad 210 haben ein spezielles, aufeinander abgestimmtes Aussehen, welches anhand der Figur 3 näher erläutert werden soll. Die Figur 3 zeigt einen Schnitt quer durch den zylindrischen Rand 162 des Tellerrads 142 und zwar so, daß der Schnitt auch durch den zweiten Mitnehmer 190 und durch die beiden Aussparungen 191 und 192 verläuft. Geschnitten dargestellt ist auch der Stumpf 136 mit der Bohrung 137 und der Kerbe 139 sowie die zweite Welle 140. Die Figur 3 zeigt einen Blick senkrecht auf einen Teil der ersten Seite 124 der Basisplatte 120, auf die Rückdrehfeder 155, das Sternrad 210, die Scheibe 199 und den Schraubenkopf 195, sowie auf den soeben beschriebenen Schnitt durch das Tellerrad 142. Das Tellerrad 142 hat einen Umfang 215 und das Sternrad 210 hat einen in geeigneter Weise unterbrochenen Umfang 216. Das Tellerrad 142 hat eine Drehachse 218 und das Sternrad 210 hat eine Drehachse 219. Der Abstand zwischen der Drehachse 218 und der Drehachse 219 ist kleiner als die Summe des Radiuses des Umfangs 215 plus des Radiuses des Umfangs 216. Das Tellerrad 142 und das Sternrad 210 wirken ähnlich zusammen wie ein an sich bekanntes, sogenanntes Einzahngetriebe bzw. Maltesergetriebe, weshalb auf deren Funktion hier nur kurz eingegangen werden soll. Das Sternrad 210 kann nur so stehen, daß der zylindrische Rand 162 des Tellerrads 142 zumindest etwas in eine erste Senke 222 oder in eine zweite Senke 223 des Sternrades 210 eintauchen kann, und mit jeder Umdrehung des Tellerrads 142 kommt der zweite Mitnehmer 190, je nach Drehrichtung, in Eingriff mit einem ersten Einschnitt 226 oder mit einem zweiten Einschnitt 227 des Sternrades 210. Der erste Einschnitt 226 wird von der ersten Senke 222 durch eine Spitze 231 und von dem Umfang 216 durch eine Kante 232 abgegrenzt. Der zweite Einschnitt 227 wird von den beiden Senken 222 und 223 durch Spitzen 233 und 234 abgegrenzt. Damit der zweite Mitnehmer 190 bei einer Drehung des Tellerrads 142 in Eingriff mit einem der Einschnitte 226 und 227 kommen kann, müssen die Kante 232 und die Spitzen 231, 233 und 234 in eine der Aussparungen 191 oder 192 eintauchen können.

Aus der ersten Seite 124 der Basisplatte 120 ragt eine Erhebung 241, an der sich u.a. der Anschlag 184 befindet, heraus. Ebenfalls auf der ersten Seite 124 ragt auch ein Rand 244 heraus. Der Rand 244 ist so hoch, daß u.a. z.B. die erste Rückdrehfeder 155, das Tellerrad 142, das Sternrad 210 und die zweite Rückdrehfeder 175 mindestens teilweise von dem Rand 244 umgeben sind. Um Platz zu schaffen zur Befestigung der Halterungen 7 und 68 an der Basisplatte 120 ist der Rand 244 unterbrochen. Die erste Halterung 7 ist durch eine Schraube 246, welche durch eine Bohrung 248 in der Basisplatte 120 hindurchgesteckt und in ein Gewinde 250 hineingeschraubt ist, an der Basisplatte 120 befestigt. In gleicher Weise ist auch die zweite Halterung 68 durch eine hier allerdings nicht gezeigte Schraube an der Basisplatte 120 befestigt.

Der auf der zweiten Seite 125 der Basisplatte 120 angeflanschte Stellmotor 130 ist mit einer Haube 252 abgedeckt. In der Haube befindet sich eine Aussparung 254, durch welche nicht gezeichnete Leitungen zur Energiezufuhr und Ansteuerung des Stellmotors 130 hindurchgeführt werden können. Auch die auf der ersten Seite 124 angeordneten Teile der Vorrichtung sind mit einer weiteren Haube 256 abgedeckt. Zwecks besserer Übersichtlichkeit ist die Haube 256 in den Figuren 1 und 2 nur durch strichpunktierte Linien angedeutet. Die Haube 256 hat zwei Aussparungen 257, von denen nur eine in den Figuren 4 und 5 dargestellt ist. Durch die erste Aussparung wird der erste Teil 1 der Übertragungseinrichtung und durch die zweite Aussparung 257 wird der zweite Teil 66 der Übertragungseinrichtung hindurchgeführt. Zwischen der Haube 252 und der Haube 256 befindet sich die Basisplatte 120, von der zwei Ecken 258 und 259 die Hauben 252 und 256 seitlich überragen. In den Ecken 258 und 259 befindet sich je eine Aussparung 261 und 262. Mit diesen Aussparungen 261 und 262 kann die Basisplatte 120 und damit die gesamte Vorrichtung z.B. mit nicht gezeichneten Schrauben an einem beliebigen, nicht gezeichneten Chassis, z.B. einer Fahrzeugkarosserie, befestigt werden.

Versuche haben gezeigt, daß das Ergebnis bei dem Eingriff in die Übertragungseinrichtung besser ist, wenn mit einem an sich bekannten Wegmeßsystem 265, z.B. einem Potentiometer, die Stellung des Steuerorgans 6 erfaßt werden kann. Von dem Wegmeßsystem 265 ausgehende Meßsignale können dann von einer geeigneten Steuerelektronik zusammen mit weiteren Sollgrößen zu Steuersignalen verarbeitet werden, mit denen der Stellmotor 130 angesteuert wird.

Wie eingangs beschrieben, kann bei der Vorrichtung mit der Übertragungseinrichtung 1, 66 zwischen zwei Betriebszuständen unterschieden werden: einem ungeregelten Betriebszustand und einem regelten Betriebszustand.

Im ungeregelten Betriebszustand ist der Stellmotor 130 nicht angesteuert. Das dritte Drehglied 80 befindet sich wegen der Rückdrehfederung in einer Ruhestellung. Die Ruhestellung des dritten Drehglieds 80 kann konstruktiv so festgelegt werden, daß das erste Drehglied 2 und das zweite Drehglied 30 in jede gewünschte Position gedreht werden können, ohne daß eine der Anschlagflächen 51 und 52 des zweiten Drehglieds 30 an einer der Anlageflächen 96 und 97 des dritten Drehglieds 80 zur Anlage kommt. Die beiden ersten Drehglieder 2 und 30 können somit verdreht werden, ohne daß der Rotor 132 des Stellmotors 130 gedreht werden muß.

An dem ersten Teil 1 der Übertragungseinrichtung, in dem Ausführungsbeispiel der Bowdenzug, ist einerseits das Bedienelement 3 angelenkt und andererseits, wie beschrieben, das erste Drehglied 2. An dem zweiten Teil 66 der Übertragungseinrichtung ist einerseits, wie oben beschrieben, das zweite Drehglied 30 und andererseits das Steuerorgan 6 angelenkt. Mit der Spannfeder 72, deren erstes Ende 74 auf das erste Drehglied 2 und deren zweites Ende 75 auf das zweite Drehglied 30 wirken kann, wird der Anschlag 19 des ersten Drehglieds 2 in Richtung gegen den Anschlag 46 des zweiten Drehglieds 30 gedrückt. Die Spannfeder 72 ist zwischen den beiden Drehgliedern 2 und 30 mit Vorspannung eingebaut. Im Grunde würde es genügen, wenn in dem ersten Drehglied 2 zur Aufnahme des ersten Endes 74 der Spannfeder 72 ein einziger radialer Schlitz 23 vorgesehen würde. Durch Vorsehen mehrerer Schlitze 23 in dem ersten Drehglied 2 kann die Vorspannung der Spannfeder 72 in relativ feinen Stufen eingestellt werden.

Das erste Drehglied 2 wird durch das Führungsteil 55 mit den beiden Außendurchmessern 57 und 58 und mit der Stufe 59 und durch die zentrische Durchgangsbohrung 12 im ersten Drehglied 2 in axialer und radialer Richtung geführt. Es kann aber auch die Durchgangsbohrung 40 des zweiten Drehglieds 30 etwas größer ausgeführt sein, so daß eine Büchse eingeschoben werden kann, auf der dann das erste Drehglied 2 und das zweite Drehglied 30 gegenseitig geführt werden. Durch die Vorspannung der Feder 72 und durch die gegenseitige Führung des ersten Drehglieds 2 und des zweiten Drehglieds 30 bilden diese beiden Drehglieder zusammen mit der Spannfeder 72 eine kompakte, leicht zu montierende Einheit.

Über den ersten Teil 1 der Übertragungseinrichtung wird das erste Drehglied 2 bewegt. Eine Bewegung des ersten Drehglieds 2 überträgt sich im ungeregelten Betriebszustand unmittelbar auf das zweite Drehglied 30 und dessen Bewegung wird über den zweiten Teil 66 der Übertragungseinrichtung auf das Steuerorgan 6 übertragen. Eine Verstellung des Bedienelementes 3 und damit der Bowdenzugseele 5 in einer durch einen Pfeil 269 gekennzeichneten Richtung bewirkt eine gleichartige Verstellung der Bowdenzugseele 64 und damit des Steuerorganes 6 in der durch einen weiteren Pfeil 270 gekennzeichneten Richtung. Bei einer Verstellung des Bedienelementes 3 entgegen der Richtung des Pfeiles 269 ist es entsprechend. Es besteht eine eindeutige Zuordnung zwischen einer Stellung des Bedienelementes 3 zu einer Stellung des Steuerorganes 6.

Bei selbstfahrenden Maschinen, z.B. Personenkraftwagen, können mit der Übertragungseinrichtung üblicherweise nicht sowohl Zug- als auch Druckkräfte übertragen werden. Ist dies so der Fall, dann muß eine Kraft einer z.B. an dem Steuerorgan 6 angeordneten Rückstellfeder 266 das Steuerorgan 6 in eine Ausgangslage zurückstellen können. Mit einer an dem Bedienelement 3 angreifenden Bedienkraft wird dann mittels der Übertragungseinrichtung das Steuerorgan 6 mehr oder weniger von der Ausgangslage wegbewegt. Die Rückstellfeder 266 wirkt aber auch auf das zweite Drehglied 30 entgegen der Spannfeder 72. Da im ungeregelten Zustand das zweite Drehglied 30 gegenüber dem ersten Drehglied 2 keine Relativbewegung ausführen darf, muß die Kraft der Spannfeder 72 größer sein als die Kraft der Rückstellfeder 266, wobei auch noch Reibkräfte in der Übertragungseinrichtung mit berücksichtigt werden müssen. Können, wie es bei ortsfest stehenden Maschinen gelegentlich der Fall ist, mit der Übertragungseinrichtung Zug- und Druckkräfte übertragen werden, so kann ggf. die Rückstellfeder 266 entfallen und die Spannfeder 72 kann schwächer ausgeführt sein.

Um Gewicht zu sparen und/oder um die Spannfeder 72 einfach montieren und/oder beobachten zu können, können in der Scheibe 9 des ersten Drehglieds 2 und/oder in der Scheibe 31 des zweiten Drehglieds 30 in der Zeichnung nicht dargestellte Aussparungen vorgesehen werden.

Das dritte Drehglied 80 wird mit Hilfe der Führungsbuchse 82 in der zentrischen Durchgangsbohrung 40 des zweiten Drehglieds 30 im Bereich mit dem größeren Durchmesser 42 und der Stufe 43 in axialer und radialer Richtung geführt. Dies bietet eine leichte Montagemöglichkeit des dritten Drehglieds 80, zusammen mit dem zweiten Drehglied 30 und dem ersten Drehglied 2 auf der fest mit der Basisplatte 120 verbundenen ersten Welle 110. Es ist aber auch möglich, die Drehglieder 2, 30, 80 so auszuführen, daß sie allein und direkt auf der ersten Welle 110 geführt werden.

Der Noppen 48 an dem zweiten Drehglied 30 mit dem Elastomerformteil 50 mit den Anschlagflächen 51 und 52 ragt in die Aussparung 94 des dritten Drehglieds 80. Die Aussparung 94 muß so viel Platz bieten, daß mit Verstellung der beiden Drehglieder 2 und 30 von einer gewünschten Drehstellung in eine andere gewünschte Drehstellung die Anschlagflächen 51 und 52 des zweiten Drehglieds 30 nicht an den Anlageflächen 96 und 97 des dritten Drehglieds 80 zur Anlage kommen, wenn sich das dritte Drehglied 80 in seiner Ruhestellung befindet. Im ungeregelten Betriebszustand ermöglicht dies eine Verstellung des Steuerorgans 6 mittels des Bedienelementes 3 vollständig ohne Beeinflussung durch den Stellmotor 130.

Anstatt den Noppen 48 an dem zweiten Drehglied 30 vorzusehen, kann der Noppen 48 auch an dem dritten Drehglied 80 und die Aussparung 94 an dem zweiten Drehglied 30 vorgesehen werden.

Der Noppen 48 mit den Anschlagflächen 51, 52 des zweiten Drehgliedes 30 bildet zusammen mit der Aussparung 94 und den Anlageflächen 96, 97 des dritten Drehgliedes 80 eine Kopplung. Im geregelten Betriebszustand kommt eine der Anschlagflächen 51, 52 an einer der Anlageflächen 96, 97 zur Anlage, d.h. die Kopplung ist wirksam. Im ungeregelten Betriebszustand können die Anschlagflächen 51, 52 von den Anlageflächen 96, 97 abheben, d.h. die Kopplung ist unwirksam. Somit besteht zwischen zweitem 30 und drittem Drehglied 80 eine Kopplung 48, 51, 52, 94, 96, 97, die bei bestimmten Stellungen dieser Drehglieder 30, 80 zueinander nicht wirksam ist.

Ist der Durchmesser des Einstichs 11 des ersten Drehglieds 2 gleich wie der Durchmesser des Einstichs 34 des zweiten Drehglieds 30, dann wird im ungeregelten Betriebszustand mit Verstellung der Bowdenzugseele 5 des ersten Teils 1 der Übertragungseinrichtung um einen gewissen Betrag, die Bowdenzugseele 64 des zweiten Teils 66 der Übertragungseinrichtung um genau den gleichen Betrag verstellt. Sind die beiden Durchmesser aber unterschiedlich, dann wird die Übertragung einer Verstellung der Bowdenzugseele 5 auf die Bowdenzugseele 64 entweder verstärkt oder gemindert. Die Einstiche 11 und 34 der beiden Drehglieder 2 und 30 müssen nicht unbedingt kreisrund und nicht unbedingt zentrisch zu den Durchgangsbohrungen 12 und 40 sein. Ist mindestens einer der Einstiche 11, 34 nicht zentrisch zur entsprechenden Durchgangsbohrung 12, 40 und/oder hat einer der Einstiche z.B. die Form einer Kurvenscheibe, so ist es möglich das Übertragungsverhältnis zwischen dem ersten Teil 1 und dem zweiten Teil 66 der Übertragungseinrichtung in Abhängigkeit vom Drehwinkel der Drehglieder 2, 30 in weiten Grenzen beliebig zu gestalten. Z.B. kann für kleine Leistungsbereiche der Antriebsmaschine ein relativ großes Übertragungsverhältnis und für große Leistungsbereiche kann ein relativ kleines Übertragungsverhältnis gewählt werden.

Mit der in den Figuren 1 und 2 beispielhaft wiedergegebenen Vorrichtung kann im geregelten Betriebszustand durch den Stellmotor 130 die Bowdenzugseele 64 des zweiten Teils 66 der Übertragungseinrichtung und damit auch das Steuerorgan 6 sowohl in Richtung des Pfeiles 270 als auch entgegengeesetzt dazu verstellt werden. Bei der in den Figuren 4 und 5 wiedergegebenen Vorrichtung ist eine Verstellung der Bowdenzugseele 64 des zweiten Teils 66 der Übertragungseinrichtung und damit auch des Steuerorgans 6 durch den Stellmotor nur in Richtung des Pfeiles 270 vorgesehen.

Um das Steuerorgan 6 über den Stellmotor 130 z.B. in Richtung des Pfeiles 270 zu verstellen, muß das dritte Drehglied 80 in einer durch einen weiteren Pfeil 271 gekennzeichneten Richtung verdreht werden, bis die Anlagefläche 96 an der Anschlagfläche 51 zur Anlage kommt und das zweite Drehglied 30 entgegen der Federkraft der Spannfeder 72 verdreht wird. Dadurch hebt der Anschlag 46 des zweiten Drehglieds 30 vom Anschlag 19 des ersten Drehglieds 2 ab. Der Drehwinkel des dritten Drehglieds 80 wird in Richtung des Pfeiles 271 durch Anlegen des Ansatzes 101 an der Anschlagplatte 182 begrenzt. Eine noch so starke Betätigung der Bowdenzugseele 5 und dadurch des ersten Drehglieds 2 entgegen der Richtung des Pfeiles 269 hat dabei keinen oder so gut wie keinen Einfluß auf die Stellung der Bowdenzugseele 64. Eine Betätigung des ersten Drehglieds 2 entgegen der Richtung des Pfeiles 269 läßt sich hierbei nicht mehr auf das zweite Drehglied 30 und damit auf das Steuerorgan 6 übertragen.

Soll durch den Stellmotor 130 in der anderen Richtung, d.h. entgegen der Richtung des Pfeiles 270 geregelt werden, was bei dem ersten Ausführungsbeispiel (Figuren 1 bis 3) vorgesehen ist, so muß z.B. die Anlagefläche 97 des dritten Drehglieds 80 an der Anschlagfläche 52 des zweiten Drehglieds 30 zur Anlage gebracht werden und das zweite Drehglied 30 muß durch das dritte Drehglied 80 verdreht werden. Dabei werden auch die Bowdenzugseele 64 und das Steuerorgan 6 entgegen der Richtung des Pfeiles 270 verstellt. Gleichzeitig wird aber auch das erste Drehglied 2 mit verdreht. Ist der erste Teil 1 der Übertragungseinrichtung z.B. ein Seilzug, dann kann der Seilzug etwas durchhängen oder, ist der erste Teil 1 der Übertragungseinrichtung z.B. ein Gestänge, dann wird das Bedienelement 3 etwas mit verstellt, außer es sind in dem Gestänge Maßnahmen dagegen vorgesehen.

Soll über den Stellmotor 130 nur in einer Richtung verstellt werden können, so genügt auch nur eine der Anschlagflächen 51, 52 am zweiten Drehglied 30 und nur eine der Anlageflächen 96, 97 des dritten Drehglieds 80.

Bei Nichtansteuerung des Stellmotors 130 sorgt die Rückdrehfederung dafür, daß das dritte Drehglied 80 in seine Ruhestellung gebracht wird. Da im geregelten Betriebszustand in dem ersten Ausführungsbeispiel (Figuren 1 und 2) die Bowdenzugseele 64 und das Steuerorgan 6 durch den Stellmotor 130 sowohl in Richtung des Pfeiles 270 als auch entgegengesetzter Richtung verstellt werden kann, muß das dritte Drehglied 80 aus seiner Ruhestellung sowohl in die eine Drehrichtung als auch in die andere Drehrichtung jeweils bis zu einem maximalen Winkel verdreht werden können. Nach Auslenkung des dritten Drehglieds 80 in die eine Richtung muß die Rückdrehfederung entgegensetzt dazu das dritte Drehglied 80 zurückstellen können und nach Auslenkung in die andere Richtung muß die Rückdrehfederung 155, 175 ebenfalls entgegegesetzt dazu das dritte Drehglied 80 in die Ruhestellung zurückstellen können. Die Ruhestellung des dritten Drehgliedes 80 kann sich, je nach Ausführung, über einen gewissen Drehwinkel erstrecken.

In dem zweiten Ausführungsbeispiel (Figuren 4 und 5) ist eine Verstellung der Bodenzugseele 64 und des Steuerorgans 6 durch den Stellmotor 130 nur für eine Richtung, nämlich in Richtung des Pfeiles 270, vorgesehen. Deshalb ist es ausreichend, wenn die Rückdrehfederung 155 das dritte Drehglied 80 nur in einer Richtung, d.h. entgegen der Richtung des Pfeiles 271 zurückstellen kann. Deshalb enthält in dem zweiten Ausführungsbeispiel (Figuren 4 und 5) die Rückdrehfederung nur die Rückdrehfeder 155.

Wird in dem ersten Ausführungsbeispiel (Figuren 1 und 2) im geregelten Betriebszustand das dritte Drehglied 80 entgegen der durch den Pfeil 271 gekennzeichneten Richtung aus seiner Ruhestellung heraus verdreht, dann wird die Rückdrehfeder 175, ein Bestandteil der Rückdrehfederung, mittels des Ansatzes 102, welcher an dem zweiten Federende 180 der Rückdrehfeder 175 zur Anlage kommt, gespannt. Dabei hebt das Federende 180 von dem ortsfesten Anschlag 184 ab. Das dritte Drehglied 80 kann entgegen der Kraft der Rückdrehfeder 175 so weit verdreht werden, bis das zweite Federende 180 oder eine Partie des dritten Drehglieds 80 an einem ortsfesten Anschlag zur Anlage kommt. Wurde das dritte Drehglied 80 entgegen der Richtung des Pfeils 271 aus seiner Ruhelage verdreht, dann kann die Rückstellfeder 175 das dritte Drehglied 80 wieder zurückdrehen, bis das zweite Federende 180 an dem ortsfesten Anschlag 184 zur Anlage kommt. Wegen dem Anschlag 184 kann die Rückdrehfeder 175 im eingebauten Zustand mit einer Vorspannung versehen sein.

In beiden Ausführungsbeispielen kann das dritte Drehglied 80 im geregelten Betriebszustand durch den Stellmotor 130 in Richtung des Pfeils 271 aus seiner Ruhestellung verdreht werden. Die Rückdrehfederung ist bestrebt, das dritte Drehglied 80 wieder in seine Ruhestellung zurückzudrehen. Die Rückdrehfeder 155, als Bestandteil der Rückdrehfederung, kann über das Tellerrad 142 und über das zweite Treibrad 144 (Figuren 1 und 2), bzw. über das Treibrad 144 allein (Figuren 4 und 5), indirekt auf das dritte Drehglied 80 wirken. Die Rückdrehfeder 155 wirkt auf das dritte Drehglied 80 entgegen der Richtung des Pfeiles 271 bis die Ruhestellung erreicht ist. In Figur 4 und 5 wirkt die Rückdrehfeder 155 direkt auf das zweite Treibrad 144 und über dieses dann auf das dritte Drehglied 80. Damit in Figur 1 und 2 die Rückdrehfeder 155 auf das dritte Drehglied 80 wirken kann, muß das erste Anschlagende 167 des Tellerrads 142 an der ersten Anschlagkante 171 des Treibrads 144 zur Anlage kommen. Zusätzlich muß aber in dem ersten Ausführungsbeispiel (Figuren 1 und 2) das dritte Drehglied 80 von dem Stellmotor 130 über die von der Rückdrehfeder 155 bestimmte Ruhestellung hinaus entgegen der Richtung des Pfeiles 271 verstellt werden können. Dies geschieht in dem ersten Ausführungsbeispiel dadurch, daß das Treibrad 144 gegenüber dem Tellerrad 142 noch weitergedreht werden kann, wobei dann die Anschlagkante 171 von dem Anschlagende 167 abhebt. Das Treibrad 144 kann gegenüber dem Tellerrad 142 so weit verdreht werden, bis andererseits die zweite Anschlagkante 172 an dem zweiten Anschlagende 168 des Tellerrads 142 zur Anlage kommt.

Bei dem ersten Ausführungsbeispiel (Figuren 1 bis 3) soll einerseits die Rückdrehfeder 155 das dritte Drehglied 80 entgegen der Richtung des Pfeiles 271 mit ausreichend großer Kraft in die Ruhestellung zurückdrehen können, andererseits muß sichergestellt sein, daß die Rückdrehfeder 155 das dritte Drehglied nicht über deren Ruhestellung hinaus zurückdreht und desweiteren muß aber auch, wie oben beschrieben, ein Weiterdrehen des dritten Drehglieds 80 über diese Ruhestellung hinaus durch den Stellmotor 130 möglich sein.

Damit die Rückdrehfeder 155 trotz Vorspannung das dritte Drehglied 80 nicht über die Ruhestellung hinaus zurückdrehen kann, ist ein Gesperre vorgesehen. Das Gesperre besteht im wesentlichen aus dem Tellerrad 142 und dem Sternrad 210. Anzahl und Winkel der möglichen Umdrehungen des Tellerrads 142 wird bestimmt durch die Anzahl der Einschnitte 226, 227 (Figur 3) und der Senken 222, 223 des Sternrads 210.

Das Tellerrad 142 kann aus der in der Figur 3 dargestellten Position entgegen der Richtung eines Pfeils 280 nicht verdreht werden, da die Kante 232 des Tellerrads 142 an dem Umfang 216 des Sternrads 210 anliegt. Wird das Tellerrad 142 aus der in der Figur 3 dargestellten Position in Richtung des Pfeils 280 verdreht, dann dreht der Mitnehmer 190 des Tellerrads 142 das Sternrad 210 durch Eingreifen in den ersten Einschnitt 226 einen Schritt weiter bis der Umfang 215 des Tellerrads 142 in die erste Senke 222 des Sternrads 210 eingreift. Dadurch wird eine weitere Drehung des Tellerrads 142 in Richtung des Pfeils 280 ermöglicht bis der Mitnehmer 190 des Tellerrads 142 das Sternrad 210 durch Eingeifen in den zweiten Einschnitt 227 wieder einen Schritt weiter dreht. Der Umfang 215 des Tellerrads 142 greift darauf in die zweite Senke 223 des Sternrads 210 ein. Dadurch wird eine weitere Drehung des Tellerrads 142 in Richtung des Pfeils 280 ermöglicht, bis das dritte Drehglied 80 (Figuren 1 und 2) mit seinem Ansatz 101 an die Anschlagplatte 182 anschlägt. Je nach gewünschtem Drehwinkel des Tellerrads 142 können in dem Sternrad 210 ein Einschnitt 226, 227 oder zwei oder mehr Einschnitte 226, 227 vorgesehen werden. Ebenso ist eine entsprechend passende Anzahl der Senken 222, 223 vorzusehen.

Das mit dem Rotor 132 des Stellmotors 130 verbundene erste Treibrad 131 dreht das zweite Treibrad 144, und dieses wiederum kann das dritte Drehglied 80 verdrehen. Das erste Treibrad 131 steht mit der ersten Scheibe 169 des zweiten Treibrads 144 und die zweite Scheibe 170 des zweiten Treibrads 144 mit dem dritten Drehglied 80 über Zahnprofile in Eingriff und überträgt und ein von dem Rotor 132 des Stellmotors 130 erzeugtes Drehmoment auf das dritte Drehglied 80. Die Übertragung des Drehmoments kann aber auch dadurch geschehen, daß die Zahnprofile der Treibräder 131, 144 und des dritten Drehglieds 80 ganz oder teilweise ersetzt werden, z.B. durch Reibbeläge, wodurch ein Drehmoment mittels Reibung übertragen werden könnte.

Die erste Rückdrehfeder 155 wirkt über das Treibrad 144 mittelbar auf das dritte Drehglied 80. Wegen der Übersetzung zwischen dem Treibrad 144 und dem dritten Drehglied 80 bietet dies den Vorteil, daß ein von der Rückdrehfeder 155 erzeugtes Rückdrehmoment ebenfalls übersetzt wird, weshalb das Rückdrehmoment der Rückdrehfeder 155 entsprechend der Übersetzung kleiner ausgelegt werden kann.

Die Rückdrehfeder 175 (Figuren 1 und 2) wirkt unmittelbar auf das dritte Drehglied 80. Dies hat den Vorteil, insbesondere wenn für die Rückdrehfeder 175 nur eine relativ kleine Auslenkung vorgesehen ist, daß für diese Rückdrehfeder, wegen der relativ kleinen Auslenkung, ein relativ starkes Flachband verwendet werden kann, wodurch ebenfalls ein ausreichend hohes Rückdrehmoment auf das dritte Drehglied 80 erzeugt werden kann.

Bei dem in den Figuren 1 und 2 gezeigten und näher beschriebenen ersten Ausführungsbeispiel ist es im geregelten Beriebszustand möglich, das zweite Drehglied 30 durch den Stellmotor 130 sowohl in die eine Drehrichtung als auch in die andere Drehrichtung zu verdrehen. Es ist somit möglich die Bowdenzugseele 64 und damit das Steuerorgan 6 sowohl in die eine Richtung als auch in die andere Richtung zu verstellen.

Soll die Verdrehung des zweiten und dritten Drehglieds 30, 80 durch den Stellmotor 130 nur in einer Richtung möglich sein, so genügt eine der beiden Rückdrehfedern 155, 175 für die Rückdrehfederung, weil dann die Rückdrehfederung nur in einer Richtung wirken muß. Besteht die Rückdrehfederung z.B. nur aus der Rückdrehfeder 155, wie es in dem zweiten Ausführungsbeispiel (Figuren 4 und 5) der Fall ist, so kann das Gesperre, bestehend aus dem Tellerrad 142 und dem Sternrad 210, entfallen, weil dann die Rückdrehfeder 155 das dritte Drehglied 80 so weit zurückdrehen kann, bis der Ansatz 102 an dem dritten Drehglied 80 an einem ortsfesten, z.B. an der Basisplatte 120 angebrachten Anschlagplatte 282 zur Anlage kommt. Das zweite Ende 157 der Rückdrehfeder 155 kann dann direkt an dem Treibrad 144 angeordnet werden. Besteht die Rückdrehfederung nur aus der Rückdrehfeder 175, dann kann der Anschlag 184 für die Rückdrehfeder 175 an der Basisplatte entfallen, weil die Rückdrehfeder 175 das dritte Drehglied so weit zurückdrehen kann, bis eine dafür vorgesehene Partie des dritten Drehgliedes 80 an einem ortsfesten Anschlag zur Anlage kommt. Auch das Gesperre 142, 210 kann entfallen.

Für die Rückdrehfederung wurden in dem ersten Ausführungsbeispiel (Figuren 1 und 2) zweckmäßigerweise zwei verschieden ausgeführte Rückdrehfedern 155, 175 gewählt. Es ist aber auch möglich, beide Rückdrehfedern z.B. nach Art der Rückdrehfeder 155 oder 175 zu gestalten und anzulenken. Auch ein gegenseitiges Austauschen der beiden Rückdrehfedern 155, 175 wäre möglich.

Durch Zwischenschalten eines zweiten Treibrads 144 zwischen dem ersten Treibrad 131 und dem dritten Drehglied 80 ist es möglich, den Achsabstand zwischen dem Rotor 132 des Stellmotors 130 und der ersten Welle 110, auf der die Drehglieder 2, 30, 80 angeordnet sind, ziemlich klein zu halten. Das erste Treibrad 131 ist so zum dritten Drehglied 80 angeordnet, daß es in radialer Richtung nicht über dessen Außenumfang hinausragt.

Das Zahnprofil 92 des dritten Drehglieds 80 erstreckt sich nur im Bereich des Ringbogens 87, was einen gewissen Gewichtsausgleich für die etwas einseitig angeordneten Ansätze 101, 102 schafft.

Der Stellmotor 130 kann ein Rotationsmotor oder ein eine Längsbewegung abgebender Linearmotor sein. Er kann elektrisch, hydraulisch, pneumatisch usw. angetrieben sein.

Die erfindungsgemäße Vorrichtung kann verwendet werden bei Übertragungseinrichtungen zwischen dem Bedienelement 3 und dem Steuerorgan 6 für die Antriebsmaschine z.B. in ortsfest stehenden Maschinen und in selbstfahrenden Maschinen, wie z.B. Personenkraftwagen und Lastkraftwagen. Das Bedienelement kann z.B. hand- oder fußbetätigbar sein. Die Übertragungseinrichtung zusammen mit dem Bedienelement und dem Steuerorgan kann so ausgelegt sein, daß das Bedienelement bei Wegfall einer Bedienkraft in eine Ausgangslage zurückkehrt. Es kann aber auch so sein, daß das Bedienelement bei Wegfall der Bedienkraft in jeder zuvor eingestellten Position stehen bleibt. Die Antriebsmaschine kann jede Art von Antriebsmaschine sein, deren Leistung durch das Steuerorgan bestimmbar ist, wie z.B. eine Brennkraftantriebsmaschine.

Um die Leistung zwischen einem minimalen und einem maximalen Wert verstellen zu können, muß das zweite Drehglied 30 mindestens um einen Winkel Alpha ($\alpha$) zwischen einer ersten Endlage und einer zweiten Endlage in zwei Drehrichtungen verdrehbar sein (Figur 1). Dabei ist es möglich, daß dieser Winkel Alpha ($\alpha$) nur im ungeregelten Betriebszustand über das Bedienelement 3 oder nur im geregelten Betriebszustand über den Stellmotor 130 und das dritte Drehglied 80 erreichbar ist. Es kann aber auch sein, daß z.B. die erste Endlage in der einen Drehrichtung nur über den Stellmotor 130 und die zweite Endlage nur über das Bedienelement 3 erreichbar ist. Soll im ungeregelten Betriebszustand die Leistung zwischen dem maximalen und dem minimalen Wert über das Bedienelement 3 bzw. die Bowdenzugseele 5 verstellt werden können, ohne Mitdrehen des dritten Drehgliedes 80 und des Stellmotors 130, so muß die Aussparung 94 ausreichend groß sein, um ein Verdrehen des zweiten Drehgliedes 30 um den Winkel Alpha ($\alpha$) nicht zu behindern.

Wie oben beschrieben, kann bei der anhand des zweiten Ausführungsbeispiels (Figuren 4 und 5) beschriebenen Vorrichtung die Bowdenzugseele 64 in Richtung des Pfeiles 270 durch den Stellmotor 130 verstellt werden. Diese Vorrichtung kann deshalb z.B. bei einem Kraftwagen beim Anfahren und beim Beschleunigen zur Verhinderung oder Begrenzung von Vortriebsschlupf zwischen Antriebsrädern und einer Fahrbahnoberfläche dienen. Sobald geeignete Sensoren Vortriebsschlupf feststellen, wird über eine Steuerelektronik der Stellmotor 130 angesteuert. Dieser verstellt nun über die Drehglieder 80 und 30 und über die Bowdenzugseele 64 das Steuerorgan 6 in Richtung geringerer Leistung der Antriebsmaschine, und zwar um so viel, bis die Sensoren keinen unzulässigen Vortriebsschlupf feststellen können.

Bei der anhand des ersten Ausführungsbeispiels (Figuren 1 bis 3) beschriebenen Vorrichtung kann die Bowdenzugseele 64 durch den Stellmotor 130 sowohl in Richtung des Pfeiles 270 als auch in entgegengesetzter Richtung verstellt werden. Diese Vorrichtung kann deshalb, z.B. bei einem Kraftwagen, neben der Verhinderung von Vortriebsschlupf auch zur Verhinderung oder Begrenzung von durch ein Bremsmoment der Antriebsmaschine hervorgerufenen Bremsschlupf zwischen den Antriebsrädern und der Fahrbahnoberfläche verwendet werden. Sobald geeignete Sensoren Bremsschlupf feststellen, wird über die Steuerelektronik wiederum der Stellmotor 130 angesteuert und zwar so, daß dieser über die Drehglieder 80 und 30 die Bowdenzugseele 64 entgegen der Richtung des Pfeiles 270 und damit das Steuerorgan 6 in Richtung höherer Leistung verstellt, bis die Sensoren keinen unzulässigen Bremsschlupf mehr feststellen können.

Der Vortriebsschlupf kann z.B. bei übermäßig starkem Betätigen des Bedienelementes 3 in Richtung höherer Leistung auftreten. Der Bremsschlupf kann z.B. auftreten bei plötzlichem Betätigen des Bedienelementes 3 in Richtung geringerer Leistung und-/oder bei Schalten eines Getriebes zwischen der Antriebsmaschine und den Antriebsrädern in einen niedrigeren Gang. Der Vortriebsschlupf und der Bremsschlupf verschlechtern das Fahrverhalten des Kraftwagens.

Bei Ansteuerung des Stellmotors 130 über eine geeignete Steuerelektronik kann bei einer selbstfahrenden Maschine, z.B. bei einem Personenwagen, die Vorrichtung z.B. auch für eine automatische Geschwindigkeitsregelung verwendet werden.

Aus einer Vielzahl von Anwendungsfällen für die Vorrichtung wird unter Berücksichtigung des ersten Ausführungsbeispiels (Figuren 1 und 2) exemplarisch ein möglicher Fall herausgegriffen mit folgenden Annahmen: Anwendung in einem Personenwagen mit fremdgezündeter Brennkraftmaschine als Antriebsmaschine, eine Drosselklappe im Saugrohr als Steuerorgan 6, ein Gaspedal als Bedienelement 3 und ein Bowdenzug als Übertragungseinrichtung 1, 66. Eine Verstellung des Steuerorgans 3/der Bodenzugseele 64 in Richtung des Pfeiles 270 bedeutet eine Verminderung der Leistung. Eine Verstellung entgegengesetzt dazu bewirkt eine Erhöhung der Leistung. Die Rückstellfeder 266 wirkt in Richtung minimaler Leistung auf das Steuerorgan 6. Die Bedienkraft kann entgegen der Rückstellfeder 266 auf das Bedienelement 3, hier auf das Gaspedal, wirken.

Desweiteren werden folgende Bedingungen angenommen:

a) Bei Wegfall der Bedienkraft soll im ungeregelten Betriebszustand die Leistung nicht unter eine erhöhte Leerlaufleistung abfallen, damit unter allen Umständen ein sicherer Betrieb, z.B. auch bei kalter Antriebsmaschine, gewährleistet ist.

b) Über das Bedienelement 3/Gaspedal soll im ungeregelten Betriebszustand bis zur maximalen Leistung der Antriebsmaschine verstellt werden können ohne Mitdrehen des Stellmotors 130 und des dritten Drehgliedes 80.

c) Bei Bedarf, z.B. bei warmer Antriebsmaschine, soll der Stellmotor 130 über das dritte Drehglied 80 die tatsächliche Leistung unter die erhöhte Leerlaufleistung senken können.

d) Falls eine durch eine Elektronik bestimmte Soll-Leistung kleiner ist als die Leistung, welche einer augenblicklichen Gaspedalstellung entspricht, z.B. wegen durchdrehenden Antriebsrädern, soll die Leistung reduziert werden können.

e) Bei einer Gaspedalstellung, welche einer relativ kleinen Leistung entspricht, soll die tatsächliche Leistung, z.B. bei einem zu starken Bremsmoment durch die Antriebsmaschine, erhöht werden können, jedoch, z.B. aus Sicherheitsgründen, nur bis zu einem fest vorgegebenen Wert.

Zur Erfüllung der Bedingung a) muß insbesondere ein nicht gezeichneter Anschlag am ersten Drehglied oder ein Anschlag der Bowdenzugseele 5 im ersten Teil der Übertragungseinrichtung oder ein Anschlag am Gaspedal dafür sorgen, daß die Rückstellfeder 266 das Steuerorgan 6 bzw. das zweite Drehglied 30 nur bis zu einer der erhöhten Leerlaufleistung entsprechenden Nullage in Richtung der Pfeile 269, 270 zurückziehen kann. Die Nullage des zweiten Drehgliedes 30 ist in der Figur 1 durch eine strichpunktiert dargestellte Linie 285 gekennzeichnet. Zur Erfüllung der Bedingung b) muß insbesondere die Aussparung 94 entsprechend groß sein und das zweite Drehglied 30 muß entgegen der Richtung des Pfeiles 270 über das erste Drehglied 2 in die der maximalen Leistung entsprechende Endlage gebracht werden können. Dazu muß das zweite Drehglied 30 gegenüber dem dritten Drehglied 80 um einen Winkel Delta (δ) (Figur 1) frei verdrehbar sein. Zur Erfüllung der Bedingung c) muß insbesondere der Stellmotor 130 über das dritte Drehglied 80 das zweite Drehglied 30 über die Nullage hinaus in Richtung des Pfeiles 270 verstellen können. Auch dieser Winkel in Richtung geringerer Leistung ist über Anschläge auf einen Winkel Gamma (γ) begrenzbar. Zur Erfüllung der Bedingung d) muß insbesondere der Stellmotor 130 über das dritte Drehglied 80 das zweite Drehglied 30 in Richtung des Pfeiles 270 mehr oder weniger verstellen können. Zur Erfüllung der Bedingung e) muß insbesondere der Stellmotor 130 das dritte Drehglied aus seiner Ruhelage um einen Winkel Beta (β) (Figur 1) entgegen der Richtung des Pfeiles 271 verdrehen können. Durch einen Anschlag z.B. zwischen dem dritten Drehglied 80 und der Basisplatte 120 wird der Winkel Beta (β) sicher begrenzt. Je nach Ausgangslage wird das zweite Drehglied 30 maximal um den Winkel Beta (β) entgegen der Richtung des Pfeiles 270 verdreht. Auch bei einem Fehler des Stellmotors

12

130 oder der auf den Stellmotor wirkenden Steuersignale kann der Winkel Beta (β) und damit die Leistung nicht ungewollt überschritten werden.

**Patentansprüche**

1. Vorrichtung mit einem Stellmotor (130) zum Eingriff in eine Übertragungseinrichtung (1, 66) zwischen einem Bedienelement (3) und einem die Leistung einer Antriebsmaschine bestimmenden Steuerorgan (6), wobei das Bedienelement (3) mit einem ersten Drehglied (2) und das Steuerorgan (6) mit einem zweiten Drehglied (30) wirkverbunden sind und eine Spannfeder (72) vorgesehen ist, die einerseits auf das erste Drehglied (2) und andererseits auf das zweite Drehglied (30) in dem Sinne wirkt, daß die Drehglieder bestrebt sind, eine Drehbewegung relativ zueinander auszuführen, bis ein Anschlag des einen Drehglieds an einem Anschlag des anderen Drehglieds zur Anlage kommt, dadurch gekennzeichnet, daß ein drittes Drehglied (80) vorgesehen ist, mit dem der Stellmotor (130) in Wirkverbindung steht, wodurch das zweite Drehglied (30) und das dritte Drehglied (80) vom Stellmotor (130) einstellbar ist und daß zwischen zweitem und drittem Drehglied (30, 80) eine Kopplung (48, 51, 52, 94, 96, 97) besteht, die nur bei bestimmten Stellungen dieser Drehglieder (30, 80) zueinander wirksam ist.

2. Vorrichtung nach Anspruch 1, dadurch gekennzeichnet, daß die Drehglieder (2, 30, 80) koaxial zueinander angeordnet sind.

3. Vorrichtung nach Anspruch 1 oder 2, dadurch gekennzeichnet, daß das zweite Drehglied (30) über das dritte Drehglied (80) durch den Stellmotor (130) in Richtung einer geringeren Leistung der Antriebsmaschine verdrehbar ist.

4. Vorrichtung nach einem der Ansprüche 1 bis 3, dadurch gekennzeichnet, daß das zweite Drehglied (30) über das dritte Drehglied (80) durch den Stellmotor (130) in Richtung einer höheren Leistung verdrehbar ist.

5. Vorrichtung nach Anspruch 4, dadurch gekennzeichnet, daß die Verdrehung des zweiten Drehglieds (30) durch den Stellmotor (130) in Richtung höherer Leistung der Antriebsmaschine auf einen maximal zulässigen Drehwinkel Beta (β) begrenzt ist.

6. Vorrichtung nach Anspruch 3, dadurch gekennzeichnet, daß die Verdrehung des zweiten Drehglieds (30) durch den Stellmotor (130) in Richtung geringerer Leistung der Antriebsmaschine auf einen maximal zulässigen Drehwinkel Gamma (γ) begrenzt ist.

7. Vorrichtung nach einem der Ansprüche 1 bis 6, dadurch gekennzeichnet, daß das zweite Drehglied (30) relativ zu dem dritten Drehglied (80) verdrehbar ist.

8. Vorrichtung nach einem der Ansprüche 1 bis 7, dadurch gekennzeichnet, daß die Kopplung im wesentlichen aus einem an dem zweiten Drehglied (30) axial hervorstehenden, exzentrisch angeordneten Noppen (48) besteht, der in eine Aussparung (94) des dritten Drehglieds (30) eingreift, wobei sich die Aussparung (94) nicht über den gesamten Umfang erstreckt und in Umfangsrichtung gesehen mindestens ein Ende der Aussparung (94) als Anlagefläche (96, 97) für den Noppen (48) dient und daß die Aussparung (94) in Umfangsrichtung länger als die Ausdehnung des Noppens (48) in Umfangsrichtung ist.

9. Vorrichtung nach einem der Ansprüche 1 bis 8, dadurch gekennzeichnet, daß das dritte Drehglied (80) durch mindestens eine mittelbar oder unmittelbar auf das dritte Drehglied (80) einwirkende Rückdrehfederung (155, 175) in eine Ruhestellung rückstellbar ist.

10. Vorrichtung nach Anspruch 9, dadurch gekennzeichnet, daß die Rückdrehfederung (155, 175) nur in einer Drehrichtung wirksam ist.

11. Vorrichtung nach Anspruch 9, dadurch gekennzeichnet, daß die Rückdrehfederung (155, 175), je nach Stellung des dritten Drehglieds (80), entweder in die eine oder in die andere Drehrichtung wirksam ist.

12. Vorrichtung nach einem der Ansprüche 9 bis 11, dadurch gekennzeichnet, daß die Rückdrehfederung aus mindestens einer Rückdrehfeder (175) mit zwei Federenden (177, 180) besteht, deren erstes Federende (177) gehäusefest gelagert ist und deren zweites Federende (180) über einen Ansatz (102) an dem dritten Drehglied (80) auf das dritte Drehglied (80) in einer Rückdrehrichtung wirken kann.

13. Vorrichtung nach Anspruch 12, dadurch gekennzeichnet, daß das Drehen des dritten Drehglieds (80) in Rückdrehrichtung erfolgen kann, bis eine Anlagefläche des dritten Drehglieds (80) an einer gehäusefesten Anlagefläche zur Anlage kommt.

14. Vorrichtung nach Anspruch 12, dadurch gekennzeichnet, daß das zweite Federende (180) der zweiten Rückdrehfeder (175) je nach Stellung des dritten Drehglieds (80) an einem gehäusefesten Anschlag (184) zur Anlage kommen kann.

15. Vorrichtung nach Anspruch 14, dadurch gekennzeichnet, daß die Wirksamkeit der Rückdrehfeder (175) auf das dritte Drehglied (80) durch Anlage des zweiten Federendes (180) an dem gehäusefesten Anschlag (184) begrenzt wird.

16. Vorrichtung nach einem der Ansprüche 1 bis 15, dadurch gekennzeichnet, daß das dritte Drehglied (80) durch den Stellmotor (130) verdrehbar ist.

17. Vorrichtung nach Anspruch 12, dadurch gekennzeichnet, daß die Rückdrehfeder (175) eine Biegefeder ist.

18. Vorrichtung nach Anspruch 17, dadurch gekennzeichnet, daß die Biegefeder in etwa kreisbogenförmig gewunden und in etwa koaxial zu dem dritten Drehglied (80) angeordnet ist.

19. Vorrichtung nach Anspruch 17, dadurch gekennzeichnet, daß die Biegefeder eine Spiralfeder ist, welche in etwa koaxial zu dem dritten Drehglied (80) angeordnet ist.

20. Vorrichtung nach einem der Ansprüche 9 bis 19, dadurch gekennzeichnet, daß das dritte Drehglied (80) durch die mindestens eine mittelbar über ein Getriebe (131, 144) auf das dritte Drehglied (80) einwirkende Rückdrehfeder (155) in die Ruhestellung rückstellbar ist.

21. Vorrichtung nach Anspruch 20, dadurch gekennzeichnet, daß die Rückdrehfederung aus mindestens der Rückdrehfeder (155) mit zwei Enden (156, 157) besteht, deren erstes Ende (156) gehäusefest gelagert ist und deren zweites Ende (157) über ein zweites Treibrad (144) des Getriebes auf das dritte Drehglied (80) in einer Rückdrehrichtung wirken kann.

22. Vorrichtung nach Anspruch 21, dadurch gekennzeichnet, daß das Drehen des dritten Drehglieds (80) in Rückdrehrichtung erfolgen kann, bis ein Ansatz (102) des dritten Drehglieds (80) an einer gehäusefesten Anschlagplatte (282) zur Anlage kommt.

23. Vorrichtung nach Anspruch 21, dadurch gekennzeichnet, daß die Wirksamkeit der Rückdrehfeder (155) durch ein Gesperre (142, 210) begrenzbar ist.

24. Vorrichtung nach einem der Ansprüche 9 bis 23, dadurch gekennzeichnet, daß der Stellmotor (130) das dritte Drehglied (80) entgegen der durch die Rückdrehfederung (155) bewirkten Rückdrehrichtung verdrehen kann.

25. Vorrichtung nach einem der Ansprüche 21 bis 24, dadurch gekennzeichnet, daß die Rückdrehfeder (155) eine Biegefeder ist.

26. Vorrichtung nach Anspruch 25, dadurch gekennzeichnet, daß die Biegefeder eine Spiralfeder ist, die in etwa koaxial zu dem zweiten Treibrad (144) angeordnet ist.

27. Vorrichtung nach einem der Ansprüche 1 bis 26, dadurch gekennzeichnet, daß der Stellmotor (130), die Drehglieder (2, 30, 80) und die Spannfeder (72) an einer Basisplatte (120) angeordnet sind.

28. Vorrichtung nach Anspruch 27, dadurch gekennzeichnet, daß die Basisplatte (120) zwei Seiten (124, 125) hat und der Stellmotor (130) mindestens teilweise auf der einen Seite (125) und die Drehglieder (2, 30, 80) und die Spannfeder (72) mindestens teilweise auf der anderen Seite (124) angeordnet sind.

29. Vorrichtung nach Anspruch 28, dadurch gekennzeichnet, daß die Vorrichtung mindestens auf einer Seite (124, 125) von mindestens einer Haube (252, 256), bis auf einzelne funktionsnotwendige Aussparungen (254, 257), abgedeckt ist.

30. Vorrichtung nach einem der Ansprüche 27 bis 29, dadurch gekennzeichnet, daß durch eine Aussparung oder durch mehrere Aussparungen (261, 262) in der Basisplatte (120) eine Befestigung der Vorrichtung erfolgen kann.

31. Vorrichtung nach einem der Ansprüche 20 bis 30, dadurch gekennzeichnet, daß das Getriebe aus zwei Treibrädern (131, 144) beteht, wobei das erste Treibrad (131) mit dem Stellmotor (130) verbunden ist und mit einer ersten Scheibe (169) des zweiten Treibrads (144) in Eingriff steht und daß eine zweite Scheibe (170) des zweiten Treibrads (144) in Eingriff mit dem dritten Drehglied (80) steht.

32. Vorrichtung nach Anspruch 31, dadurch gekennzeichnet, daß das erste Treibrad (131), die erste und die zweite Scheibe (169, 170) des zweiten Treibrads (144) und das dritte Drehglied (80) mit je einem Zahnprofil (92, 173) versehen sind.

33. Vorrichtung nach Anspruch 32, dadurch gekennzeichnet, daß sich das Zahnprofil (92) des dritten Drehgliedes (80) über einen Winkelbereich von weniger als 360° erstreckt.

**34.** Vorrichtung nach Anspruch 31, dadurch gekennzeichnet, daß sich das erste Treibrad (131) innerhalb eines Außenumfangs des dritten Drehglieds (80) befindet.

**35.** Vorrichtung nach einem der Ansprüche 1 bis 34, dadurch gekennzeichnet, daß die Spannfeder (72) als Spiralfeder ausgebildet ist.

**36.** Vorrichtung nach Anspruch 35, dadurch gekennzeichnet, daß das erste (2) und das zweite Drehglied (30) koaxial zueinander angeordnet sind und die Spannfeder (72) weitgehend koaxial zu diesen beiden Drehgliedern (2, 30) angeordnet ist.

**37.** Vorrichtung nach Anspruch 36, dadurch gekennzeichnet, daß das erste (2) und das zweite Drehglied (30) gegenseitig drehgeführt sind, daß sich die Spannfeder (72) zwischen den beiden Drehgliedern befindet und daß die beiden Drehglieder zusammen mit der Spannfeder (72) eine Baugruppe bilden.

**38.** Vorrichtung nach einem der Ansprüche 1 bis 37, dadurch gekennzeichnet, daß eine Stellung des Steuerorgans (6) über ein Wegmeßsystem (265) erfaßbar ist.

## Claims

**1.** Device with a servomotor (130) for intervention in a transmission arrangement (1, 66) between an operating element (3) and a control means (6) determining the power of a driving machine, the operating element (3) being effectively connected to a first rotary link (2) and the control means (6) being effectively connected to a second rotary link (30) and a tensioning spring (72) being provided which acts, on the one hand, on the first rotary link (2) and, on the other hand, on the second rotary link (30) in the sense that the rotary links attempt to carry out a rotary movement relative to one another until a stop on the first rotary link comes into contact with a stop on the other rotary link, characterised in that a third rotary link (80) is provided with which the servomotor (130) is in effective connection so that the second rotary link (30) and the third rotary link (80) can be adjusted by the servomotor (130) and in that a coupling (48, 51, 52, 94, 96, 97) exists between the second and third rotary links (30, 80) which is only effective at certain positions of these rotary links (30, 80) relative to one another.

**2.** Device according to Claim 1, characterised in that the rotary links (2, 30, 80) are arranged to be mutually coaxial.

**3.** Device according to Claim 1 or 2, characterised in that the second rotary link (30) can be rotated in the direction of a lower power of the driving machine by the servomotor (130) via the third rotary link (80).

**4.** Device according to one of Claims 1 to 3, characterised in that the second rotary link (30) can be rotated in the direction of a higher power by the servomotor (130) via the third rotary link (80).

**5.** Device according to Claim 4, characterised in that the rotation of the second rotary link (30) by the servomotor (130) in the direction of higher power of the driving machine is limited to a maximum permissible angle of rotation beta ($\beta$).

**6.** Device according to Claim 3, characterised in that the rotation of the second rotary link (30) by the servomotor (130) in the direction of lower power of the driving machine is limited to a maximum permissible angle of rotation gamma ($\gamma$).

**7.** Device according to one of Claims 1 to 6, characterised in that the second rotary link (30) can be rotated relative to the third rotary link (80).

**8.** Device according to one of Claims 1 to 7, characterised in that the coupling consists essentially of an axially protruding, eccentrically located knob (48) on the second rotary link (30), which knob (48) engages in an opening (94) of the third rotary link (30) (sic), the opening (94) not extending over the entire periphery and, viewed in the peripheral direction, at least one end of the opening (94) is used as a contact surface (96, 97) for the knob (48) and in that the opening (94) is longer in the peripheral direction than the extent of the knob (48) in the peripheral direction.

**9.** Device according to one of Claims 1 to 8, characterised in that the third rotary link (80) can be returned to a rest position by at least one torsional return spring arrangement (155, 175) acting directly or indirectly on the third rotary link (80).

**10.** Device according to Claim 9, characterised in that the torsional return spring arrangement (155, 175) is only effective in one rotational direction.

**11.** Device according to Claim 9, characterised in that the torsional return spring arrangement (155, 175) is effective in either one or the other direction of rotation depending on the position of the third rotary link (80).

12. Device according to one of Claims 9 to 11, characterised in that the torsional return spring arrangement consists of at least one torsional return spring (175) with two spring ends (177, 180), of which the first spring end (177) is mounted so as to be fixed relative to the casing and of which the second spring end (180) can act on the third rotary link (80) in one return direction of rotation by means of a projection (102) on the third rotary link (80).

13. Device according to Claim 12, characterised in that the rotation of the third rotary link (80) in the return direction of rotation can take place until a contact surface of the third rotary link (80) comes into contact with a contact surface fixed relative to the casing.

14. Device according to Claim 12, characterised in that the second spring end (180) of the second torsional return spring (175) can, depending on the position of the third rotary link (80), come into contact with a stop (184) fixed relative to the casing.

15. Device according to Claim 14, characterised in that the effectiveness of the torsional return spring (175) on the third rotary link (80) is limited by contact of the second spring end (180) with the stop (184) fixed relative to the casing.

16. Device according to one of Claims 1 to 15, characterised in that the third rotary link (80) can be rotated by the servomotor (130).

17. Device according to Claim 12, characterised in that the torsional return spring (175) is a bending spring.

18. Device according to Claim 17, characterised in that the bending spring is wound approximately in the form of a circular arc and is arranged approximately coaxially with the third rotary link (80).

19. Device according to Claim 17, characterised in that the bending spring is a spiral spring which is arranged approximately coaxially with the third rotary link (80).

20. Device according to one of Claims 9 to 19, characterised in that the third rotary link (80) can be returned into the rest position by means of the at least one torsional return spring (155) acting indirectly via a gear (131, 144) on the third rotary link (80).

21. Device according to Claim 20, characterised in that the torsional return spring arrangement consists of at least the torsional return spring (155) with two ends (156, 157), of which the first end (156) is mounted so as to be fixed relative to the casing and of which the second end (157) can act on the third rotary link (80) in one return direction of rotation by means of a second driving wheel (144) of the gear.

22. Device according to Claim 21, characterised in that the rotation of the third rotary link (80) in the return direction of rotation can take place until a projection (102) of the third rotary link (80) comes into contact with a stop plate (282) fixed relative to the casing.

23. Device according to Claim 21, characterised in that the effectiveness of the torsional return spring (155) can be limited by a locking mechanism (142, 210).

24. Device according to one of Claims 9 to 23, characterised in that the servomotor (130) can rotate the third rotary link (80) against the return direction of rotation caused by the torsional return spring arrangement (155).

25. Device according to one of Claims 21 to 24, characterised in that the torsional return spring (155) is a bending spring.

26. Device according to Claim 25, characterised in that the bending spring is a spiral spring which is arranged approximately coaxially with the second driving wheel (144).

27. Device according to one of Claims 1 to 26, characterised in that the servomotor (130), the rotary links (2, 30, 80) and the tensioning spring (72) are located on a base plate (120).

28. Device according to Claim 27, characterised in that the base plate (120) has two ends (124, 125) and the servomotor (130) is arranged at least partially on one end (125) and the rotary links (2, 30, 80) and the tensioning spring (72) are arranged at least partially on the other end (124).

29. Device according to Claim 28, characterised in that the device is covered on at least one end (124, 125) by at least one cap (252, 256) with the exception of individual openings (254, 257) necessary for the functioning of the device.

30. Device according to one of Claims 27 to 29, characterised in that the device can be fastened through an opening or through a plurality of openings (261, 262) in the base plate (120).

31. Device according to one of Claims 20 to 30, characterised in that the gear consists of two driving wheels (131, 144), the first driving wheel (131) being connected to the servomotor (130) and being in engagement with a first disc (169) of the second driving wheel (144) and in that a second disc (170) of the second driving wheel (144) is in engagement with the third rotary link (80).

32. Device according to Claim 31, characterised in that the first driving wheel (131), the first and the second disc (169, 170) of the second driving wheel (144) and the third rotary link (80) are each provided with a toothed profile (92, 173).

33. Device according to Claim 32, characterised in that the toothed profile (92) of the third rotary link (80) extends over an angular range of less than 360°.

34. Device according to Claim 31, characterised in that the first driving wheel (131) is located within the outer periphery of the third rotary link (80).

35. Device according to one of Claims 1 to 34, characterised in that the tensioning spring (72) is designed as a spiral spring.

36. Device according to Claim 35, characterised in that the first rotary link (2) and the second rotary link (30) are arranged to be mutually coaxial and the tensioning spring (72) is arranged substantially coaxially with these two rotary links (2, 30).

37. Device according to Claim 36, characterised in that the first rotary link (2) and the second rotary link (30) are guided so that they can rotate relative to one another, in that the tensioning spring (72) is located between the two rotary links and in that the two rotary links, together with the tensioning spring (72), form a subassembly.

38. Device according to one of Claims 1 to 37, characterised in that a position of the control means (6) can be recorded by means of a displacement measuring system (265).

**Revendications**

1) Dispositif avec un servo-moteur (130) pour venir en prise dans un dispositif de transfert (1,166) entre un élément de réglage (3) et un organe de commande (6) déterminant la puissance d'un moteur d'entraînement, dans lequel l'élément de réglage (3) est relié de façon opérationnelle a un premier organe de rotation (2) et l'organe de commande (6) est relié d'une façon opérationnelle à un deuxième organe de rotation (30) et dans lequel il est prévu un ressort de tension (72), qui d'une part agit sur le premier organe de rotation (2) et d'autre part agit sur le deuxième organe de rotation (30) dans le sens dans lequel les organes de rotation ont tendance à effectuer un mouvement de rotation l'un par rapport à l'autre, jusqu'à ce qu'une butée de l'un des organes de rotation vienne en appui sur une butée de l'autre organe de rotation, dispositif caractérisé en ce qu'un troisième organe de rotation (80) est prévu avec lequel le servo-moteur (130) est en liaison opérationnelle, grâce à quoi le deuxième organe de rotation (30) et le troisième organe de rotation (80) peuvent être positionnés par le servo-moteur (130) et en ce qu'entre le deuxième et le troisième organe de rotation (30, 80) il y a un accouplement (48, 51, 52, 94, 96, 97), qui est opérationnel seulement dans des positions déterminées de ces organes de rotation (30, 80).

2) Dispositif selon la revendication 1, caractérisé en ce que les organes de rotation (2, 30, 80) sont disposés coaxialement les uns par rapport aux autres.

3) Dispositif selon la revendication 1 ou 2, caractérisé en ce qu'on peut faire tourner le deuxième organe de rotation (30) au moyen du troisième organe de rotation (80) par le servo-moteur (130) dans le sens d'une plus faible puissance du moteur d'entraînement.

4) Dispositif selon l'une des revendications 1 à 3, caractérisé en ce qu'on peut faire tourner le deuxième organe de rotation (30) par l'intermédiaire du troisième organe de rotation (80) par le servo-moteur (130) dans le sens d'une puissance plus élevée.

5) Dispositif selon la revendication 4, caractérisé en ce que la rotation du deuxième organe de rotation (30) dans le sens d'une puissance plus élevée du moteur d'entraînement est limitée par le servo-moteur (130) à un angle de rotation Beta ($\beta$) maximal acceptable.

6) Dispositif selon la revendication 3, caractérisé en ce que la rotation du deuxième organe de rotation (30) par le servo-moteur (130) dans le sens d'une puissance plus petite du moteur d'entraînement est limitée à un angle de rotation maximal acceptable Gamma ($\gamma$).

7) Dispositif selon l'une des revendications 1 à 6, caractérisé en ce que l'on peut faire tourner le deuxième organe de rotation (30) par rapport au troisième organe de rotation (80).

8) Dispositif selon l'une des revendications 1 à 7, caractérisé en ce que l'accouplement consiste essentiellement en une nope (48) faisant saillie axialement sur le deuxième organe de rotation (30), disposée excentriquement, qui vient en prise dans un évidement (94) du troisième organe de rotation (30), l'évidement (94) ne s'étendant pas sur tout le pourtour et, vu dans le sens périphérique, au moins une extrémité de l'évidement (94) servant de surface d'appui (96, 97) pour la nope (48) et en ce que l'évidement (94) dans le sens périphérique est plus long que l'extension de la nope (48) dans le sens périphérique.

9) Dispositif selon l'une des revendications 1 à 8, caractérisé en ce que le troisième organe de rotation (80) peut être ramenée en arrière à une position de repos par au moins un système de rappel à ressort (155, 175) agissant directement ou indirectement sur le troisième organe de rotation (80).

10) Dispositif selon la revendication 9, caractérisé en ce que le système de rappel à ressort (155, 175) n'est opérationnel que dans un sens de rotation.

11) Dispositif selon la revendication 9, caractérisé en ce que le système de rappel à ressort (155, 175), selon la position du troisième organe de rotation (80) est opérationnel soit, dans un sens de rotation, soit dans l'autre sens de rotation.

12) Dispositif selon l'une des revendications 9 à 11, caractérisé en ce que le système de rappel à ressort consiste au moins en un ressort de rappel (175) avec deux extrémités (177, 180), extrémités dont la première (177) est montée solidairement sur le boîtier et dont la deuxième (180) peut agir par l'intermédiaire d'un appendice (102), situé sur le troisième organe de rotation (80) sur celui-ci dans un sens de rotation arrière.

13) Dispositif selon la revendication 12, caractérisé en ce que la rotation du troisième organe de rotation (80) peut avoir lieu dans le sens de rotation arrière, jusqu'à ce qu'une surface d'appui du troisième organe de rotation (80) vienne en appui sur une surface d'appui solidaire du boîtier.

14) Dispositif selon la revendication 12, caractérisé en ce que la deuxième extrémité (180) du deuxième ressort de rappel (175) peut venir en appui sur une butée (184) solidaire du boîtier selon la position du troisième organe de rotation (80).

15) Dispositif selon la revendication 14, caractérisé en ce que l'action du ressort de rappel (175) sur le troisième organe de rotation (80) est limitée par l'appui de la deuxième extrémité de ressort (180) sur la butée (184) solidaire du boîtier.

16) Dispositif selon l'une des revendications 1 à 15, caractérisé en e qu'on peut faire tourne le troisième organe de rotation (80) par le servo-moteur (130).

17) Dispositif selon la revendication 12, caractérisé en ce que le ressort de rappel (175) est un ressort de flexion à lames.

18) Dispositif selon la revendication 17, caractérisé en ce que le ressort spiral est enroulé sous une forme à peu près circulaire et est disposé de façon à peu près coaxiale au troisième organe de rotation (80).

19) Dispositif selon la revendication 17, caractérisé en ce que le ressort spiral est disposé d'une manière à peu près coaxiale au troisième organe de rotation (80).

20) Dispositif selon l'une des revendications 9 à 19, caractérisé en ce qu'on peut ramener en arrière le troisième organe de rotation (80) à la position de repos par le ressort de rappel (155) agissant indirectement par l'intermédiaire d'une transmission (131, 144) sur le troisième organe de rotation (80).

21) Dispositif selon la revendication 20, caractérisé en ce que le système de rappel à ressort consiste en au moins le ressort de rappel (155) avec deux extrémités (156, 157), dont la première (156) est solidaire du boîtier et dont la deuxième (157) peut agir sur le troisième organe de rotation (80) dans un sens de rotation arrière.

22) Dispositif selon la revendication 21, caractérisé en ce que la rotation du troisième organe de rotation (80) peut avoir lieu dans le sens de rotation arrière jusqu'à ce qu'un appendice (102) du troisième organe de rotation (80) vienne en appui sur une plaque de butée (282) solidaire du boîtier.

23) Dispositif selon la revendication 21, caractérisé en ce que l'action du ressort de rappel (155) peut être limitée par un encliquetage (142, 210).

24) Dispositif selon l'une des revendications 9 à 23, caractérisé en ce que le servomoteur (130) peut faire tourner le troisième organe de rotation (80) en sens opposé au sens de rotation arrière provoqué par le système de rappel à ressort (155).

25) Dispositif selon l'une des revendications 21 à 24, caractérisé en ce que le ressort de rappel (155) est un ressort à lames.

26) Dispositif selon la revendication 25 caractérisé en ce que le ressort à lames est un ressort spiral disposé d'une manière à peu près coaxial à la deuxième roue d'entraînement (144).

27) Dispositif selon l'une des revendications 1 à 26, caractérisé en ce que le servo-moteur (130), les organes de rotation (2, 30, 50) et le ressort de tension (72) sont disposées sur une plaque de base (120).

28) Dispositif selon la revendication 27, caractérisé en ce que la plaque de base (120) a deux faces (124, 125) et le servo-moteur (130) est disposé au moins partiellement sur l'une des faces (125) et les organes de rotation (2, 30, 80) et le ressort de tension (72) sont disposés au moins partiellement sur l'autre face (124).

29) Dispositif selon la revendication 28, caractérisé en ce que le dispositif est recouvert au moins sur une face (124, 125) par au moins un capot (252, 256) jusqu'à des évidements individuels (254, 257) nécessaires pour le fonctionnement.

30) Dispositif selon l'une des revendications 27 à 29, caractérisé en ce que l'on peut obtenir une fixation du dispositif au moyen d'un évidement ou de plusieurs évidements (261, 262) dans la plaque de base (120).

31) Dispositif selon l'une des revendication 20 à 30, caractérisé en ce que la transmission consiste en les deux roues d'entraînement (131, 144), la première roue d'entraînement (131) étant reliée au servo-moteur (130), et venant en prise avec un premier disque (169) de la deuxième roue d'entraînement (144) et en ce qu'un deuxième disque (170) de la deuxième roue d'entraînement (144) vient en prise avec le troisième organe de rotation (80).

32) Dispositif selon la revendication 31, caractérisé en ce que la première roue d'entraînement (131), le premier et le second disque (169, 170) de la deuxième roue d'entraînement (144) et le troisième organe de rotation (80) sont chacun pourvus d'un profil denté (92, 173).

33) Dispositif selon la revendication 32, caractérisé en ce que le profil denté (92) du troisième organe de rotation (80) s'étend sur une zone angulaire de moins de 360°.

34) Dispositif selon la revendication 31, caractérisé en ce que la première roue d'entraînement (131) se trouve à l'intérieur du contour extérieur du troisième organe de rotation (80).

35) Dispositif selon l'une des revendications 1 à 34, caractérisé en ce que le ressort de tension (72) est constitué sous la forme d'un ressort spiral.

36) Dispositif selon la revendication 35, caractérisé en ce que le premier organe de rotation (2) et le deuxième organe de rotation (30) sont disposés coaxialement l'un par rapport à l'autre et en ce que le ressort de tension (72) est largement disposé coaxialement par rapport à ces deux organes de rotation (2, 30).

37) Dispositif selon la revendication 36, caractérisé en ce que le premier organe de rotation (2) et le deuxième organe de rotation (30) sont mutuellement mis en rotation, en ce que le ressort de tension (72) se trouve entre les deux organes de rotation et en ce que les deux organes de rotation forment en même temps que le ressort de tension (72) un groupe de construction.

38) Dispositif selon l'une des revendications 1 à 37, caractérisé en ce que l'on peut détecter une position de l'organe de commande (6) au moyen d'un système de mesure de course (265).

FIG. 1

EP 0 359 990 B1

FIG. 2

# FIG. 3

# FIG.4

EP 0 359 990 B1

FIG. 5